# EUROPEAN PATENT APPLICATION

(11) **EP 4 529 247 A2**
(43) Date of publication of application: **26.03.2025**
(21) Application number: 25156875.4
(22) Date of filing: 28.06.2023
(51) Int. Cl.: H04W 12/00

(54) **ENHANCED ADDRESS CHANGING FOR WIRELESS NETWORKING SYSTEMS**

(30) Priority: 01.07.2022 US 202263357949 P; 25.05.2023 US 202318324089
(62) Divisional of application: 23182089.5
(71) Applicant: Apple Inc., Cupertino, CA 95014 (US)
(72) Inventor: KNECKT, Jarkko L., Cupertino, CA 95014 (US); YONG, Su Khiong, Cupertino, CA 95014 (US); THAKUR, Sidharth R., Cupertino, CA 95014 (US); LIU, Yong, Cupertino, CA 95014 (US); BRIGGS, Elliot S., Cupertino, CA 95014 (US); REUVEN, Nisan, Cupertino, CA 95014 (US); DASH, Debashis, Cupertino, CA 95014 (US); BORGES, Daniel R., Cupertino, CA 95014 (US); DOMINGUEZ, Charles F., Cupertino, CA 95014 (US); ATAR, Udi, Cupertino, CA 95014 (US); EVRON, Ilan, Cupertino, CA 95014 (US)
(74) Representative: Lang, Johannes

(57) **Abstract**

Methods, systems and apparatuses for performing an address change by an access point (AP) multi-link device (MLD) and non-AP MLD are described. A non-AP MLD may transmit to an AP MLD, using one or more respective transmission (TX) links in an active mode, one or more uplink frames that include one or more respective initial addresses corresponding to one or more respective reception (RX) links of the AP MLD. The non-AP MLD may then configure the one or more respective TX links to a lower power mode. The non-AP MLD may configure the one or more respective TX links with one or more respective new addresses prior to transitioning the one or more respective TX links back to the active mode. The non-AP MLD may transmit, to the AP MLD, one or more additional uplink frames that include the one or more respective new addresses.

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the Institute of Electrical and Electronics Engineers (IEEE) 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs may also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall may be stationary devices as well).

Mobile electronic devices may take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs may utilize multi-link operation (MI,O), e.g., using a plurality of channels (e.g., links) concurrently. APs and/or STAs capable of MLO may be referred to as multi-link devices (MLD). For example, APs capable of MLO may be referred to as AP-MLDs and STAs capable of MI,O that are not acting as APs may be referred to as non-AP MLDs. Improvements in the field are desired.

### SUMMARY

Embodiments described herein relate to systems, methods, apparatuses, and mechanisms for enhanced address changing by AP and non-AP MI,Ds in wireless networking systems.

In some embodiments, a non-AP MLD may transmit to an AP MLD, using one or more respective transmission (TX) links in an active mode, one or more uplink frames that include one or more respective initial addresses corresponding to one or more respective reception (RX) links of the AP MLD. The non-AP MLD may then configure the one or more respective TX links to a lower power mode. The non-AP MLD may configure the one or more respective TX links with one or more respective new addresses prior to transitioning the one or more respective TX links back to the active mode. The non-AP MLD may transmit, to the AP MLD, one or more additional uplink frames that include the one or more respective new addresses.

According to some embodiments, configuring the one or more respective TX to the lower power mode may be performed concurrently at a selected time. Additionally or alternatively, the one or more respective TX links may be configured with the one or more respective new addresses concurrently at a selected time.

In some embodiments, the non-AP MLD may receive one or more frames from the AP MLD corresponding to the one or more respective initial addresses of the one or more respective RX links. Additionally or alternatively, the non-AP MLD may buffer the one or more received frames and modify them with the one or more respective new addresses to generate one or more modified frames. The non-AP MLD may transmit, to the AP MLD, the one or more modified frames that include the one or more respective new addresses, according to some embodiments.

According to further embodiments, the one or more respective initial addresses and one or more respective new addresses may be media access control (MAC) addresses. Additionally or alternatively, the one or more respective new addresses may be generated using one or more randomized identifiers.

In some embodiments, the non-AP MLD may be configured to transmit an Addresses Configure Request to the AP MLD. Additionally or alternatively, the Addresses Configure Request may include at least one of one or more uplink salt values, an item of link information, or one or more address change times, according to some embodiments. Furthermore, the non-AP MLD may be configured to receive an Addresses Configure Response from the AP-MLD. In some embodiments, the Addresses Configure Response may include at least one of one or more downlink salt values, and item of link information, or an approval or indication of an address change.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figures 9-10 illustrate examples of Client Privacy Enhanced (CPE) AP MLD and STA MLD architectures for address changing, according to some embodiments
Figure 11 is a communication flow diagram illustrating an example method of address changing by MLDs, according to some embodiments.
Figure 12 illustrates an example of address set changes before encryption, according to some embodiments.
Figure 13 illustrates an example flow chart of an address change before encryption, according to some embodiments.
Figure 14 illustrates an example of over the air (OTA) unicast address set randomization, according to some embodiments.
Figure 15 illustrates an example of STA mitigation techniques for changing address sets on multiple links at the same time, according to some embodiments.
Figure 16 illustrates an example of STA mitigation techniques for changing address sets on multiple links at different times, according to some embodiments.
Figures 17-19 illustrate example aspects and characteristics of signaling of new address set values, according to some embodiments.
Figure 20 illustrates an example of OTA MAC address change scheduling, according to some embodiments.
Figure 21 illustrates an example of direction and transaction identifier (TID) specific OTA MAC address changing, according to some embodiments.
Figure 22 is a communication flow diagram illustrating an example method for direction and TID specific OTA MAC address changing, according to some embodiments.
Figures 23-24 illustrate example aspects of address changing by controlling the old and new address assignments for the packet, according to some embodiments.
Figures 25-27 illustrate example aspects optimizing transmission efficiency during address changes, according to some embodiments.
Figure 28 illustrates example aspects of address change techniques for single user (SU) physical protocol data units (PPDUs), according to some embodiments.
Figures 29-34 illustrate example aspects of address changing in triggered transmissions, according to some embodiments.
Figure 35 is a communication flow diagram illustrating an example method for address changing in triggered transmissions, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that may appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**ACK:** Acknowledgment
**BA:** Block Acknowledgment
**NACK:** Negative Acknowledgment
**N-BA:** Negative Block Acknowledgment
**TSF:** Timing Synchronization Function
**QoS:** Quality of Service
**OTA:** Over the Air
**SU:** Single-User
**MU:** Multi-User
**MAC:** Media Access Control
**OMA:** Over the Air MAC
**TOMAT:** Target OTA MAC Time
**MOMAT:** Maximum OTA MAC Time
**CPE:** Client Privacy Enhanced
**BSS:** Base Station System
**SN:** Sequence Number
**PN:** Packet Number
**TID:** Transaction Identifier
**AID:** Association Identifier
**SSID:** Service Set Identifier
**SAP:** Service Access Point
**A-MSDU:** Aggregated MAC-level Service Data Unit
**MPDU:** MAC-level Protocol Data Unit
**SA:** Sender Address
**DA:** Destination Address
**PS:** Power Save
**PM:** Power Management
**EDCA:** Enhanced Distributed Channel Access
**AC:** Application Client
**PPDU:** Physical Protocol Data Unit
**BA:** Bandwidth Adaptation
**TXOP:** Transmission Opportunity
**TWT SP:** Target Wake Time Service Period
**SIFS:** Short Interframe Spacing
**RU:** Resource Unit
**HE TB PPDU:** High Efficiency Trigger Based Physical Protocol Data Unit
**BSR:** Buffer Status Report
**BSRP:** Buffer Status Report Poll
**ACI:** Adjacent Channel Interference

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.

**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.

**Wireless Device (and/or Wireless Station)** - any of various types of computer systems devices which performs wireless communications using WLAN communications. As used herein, the term "wireless device" may refer to a mobile device, as defined above, or to a stationary device, such as a stationary wireless client or a wireless base station. For example, a wireless device may be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.

**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.

**Processing Element** - refers to various implementations of digital circuitry that perform a function in a computer system. Additionally, processing element may refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Concurrent** - refers to parallel execution or performance, where tasks, processes, signaling, messaging, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

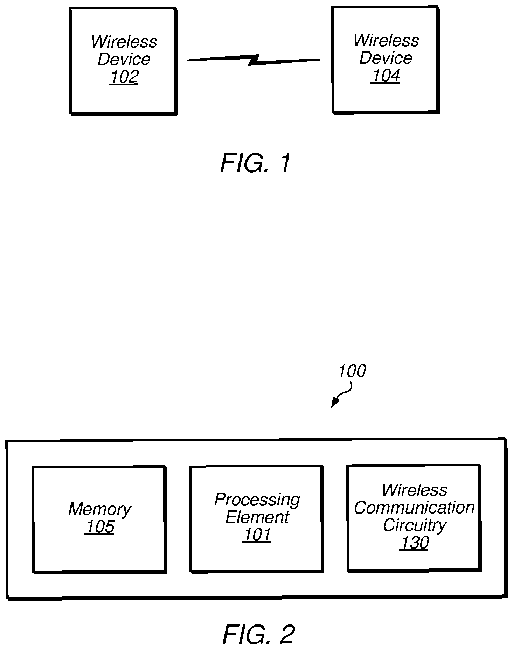

### Figures 1-2 - Wireless Communication System

Figure 1 illustrates an exemplary (and simplified) wireless communication system in which aspects of this disclosure may be implemented. It is noted that the system of Figure 1 is merely one example of a possible system, and embodiments of this disclosure may be implemented in any of various systems, as desired.

As shown, the exemplary wireless communication system includes a ("first") wireless device 102 in communication with another ("second") wireless device. The first wireless device 102 and the second wireless device 104 may communicate wirelessly using any of a variety of wireless communication techniques, potentially including ranging wireless communication techniques.

As one possibility, the first wireless device 102 and the second wireless device 104 may perform ranging using wireless local area networking (WLAN) communication technology (e.g., IEEE 802.11 / Wi-Fi based communication) and/or techniques based on WLAN wireless communication. One or both of the wireless device 102 and the wireless device 104 may also be capable of communicating via one or more additional wireless communication protocols, such as any of Bluetooth (BT), Bluetooth Low Energy (BLE), near field communication (NFC), UMTS (WCDMA, TDSCDMA), LTE, LTE-Advanced (LTE-A), NR, Wi-MAX, GPS, etc.

The wireless devices 102 and 104 may be any of a variety of types of wireless device. As one possibility, one or more of the wireless devices 102 and/or 104 may be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 may be a substantially stationary device, such as a set top box, media player (e.g., an audio or audiovisual device), gaming console, desktop computer, appliance, door, access point, base station, or any of a variety of other types of devices.

Each of the wireless devices 102 and 104 may include wireless communication circuitry configured to facilitate the performance of wireless communication, which may include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 may perform any of the method embodiments described herein, or any portion of any of the method embodiments described herein, using any or all of such components.

Each of the wireless devices 102 and 104 may include one or more antennas for communicating using one or more wireless communication protocols. In some cases, one or more parts of a receive and/or transmit chain may be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry may include a single antenna, or may include multiple antennas (e.g., for MIMO) for performing wireless communications. Alternatively, a device may include separate transmit and/or receive chains (e.g., including separate antennas and other radio components) for each wireless communication protocol with which it is configured to communicate. As a further possibility, a device may include one or more radios or radio components which are shared between multiple wireless communication protocols, and one or more radios or radio components which are used exclusively by a single wireless communication protocol. For example, a device might include a shared radio for communicating using one or more of LTE, and/or 5G NR, and separate radios for communicating using each of Wi-Fi and Bluetooth. Other configurations are also possible.

As previously noted, aspects of this disclosure may be implemented in conjunction with the wireless communication system of Figure 1. For example, a wireless device (e.g., either of wireless devices 102 or 104) may be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

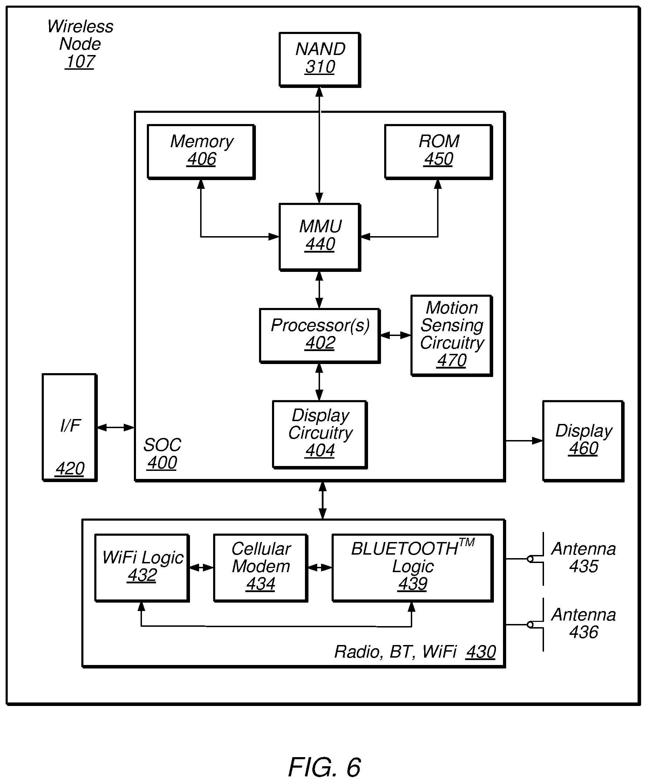

Figure 6 illustrates an exemplary wireless device 100 (e.g., corresponding to wireless devices 102 and/or 104) that may be configured for use in conjunction with various aspects of the present disclosure. The device 100 may be any of a variety of types of devices and may be configured to perform any of a variety of types of functionality. The device 100 may be a substantially portable device or may be a substantially stationary device, potentially including any of a variety of types of devices. The device 100 may be configured to perform one or more ranging wireless communication techniques or features, such as any of the techniques or features illustrated and/or described subsequently herein with respect to any or all of the Figures.

As shown, the device 100 may include a processing element 101. The processing element may include or be coupled to one or more memory elements. For example, the device 100 may include one or more memory media (e.g., memory 105), which may include any of a variety of types of memory and may serve any of a variety of functions. For example, memory 105 could be RAM serving as a system memory for processing element 101. Other types and functions are also possible.

Additionally, the device 100 may include wireless communication circuitry 130. The wireless communication circuitry may include any of a variety of communication elements (e.g., antenna(s) for wireless communication, analog and/or digital communication circuitry/controllers, etc.) and may enable the device to wirelessly communicate using one or more wireless communication protocols.

Note that in some cases, the wireless communication circuitry 130 may include its own processing element (e.g., a baseband processor), e.g., in addition to the processing element 101. For example, the processing element 101 may be an `application processor' whose primary function may be to support application layer operations in the device 100, while the wireless communication circuitry 130 may be a `baseband processor' whose primary function may be to support baseband layer operations (e.g., to facilitate wireless communication between the device 100 and other devices) in the device 100. In other words, in some cases the device 100 may include multiple processing elements (e.g., may be a multi-processor device). Other configurations (e.g., instead of or in addition to an application processor / baseband processor configuration) utilizing a multi-processor architecture are also possible.

The device 100 may additionally include any of a variety of other components (not shown) for implementing device functionality, depending on the intended functionality of the device 100, which may include further processing and/or memory elements (e.g., audio processing circuitry), one or more power supply elements (which may rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, may be operatively coupled via one or more interconnection interfaces, which may include any of a variety of types of interfaces, possibly including a combination of multiple types of interface. As one example, a USB high-speed inter-chip (HSIC) interface may be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces may be used for communications between various device components. Other types of interfaces (e.g., intra-chip interfaces for communication within processing element 101, peripheral interfaces for communication with peripheral components within or external to device 100, etc.) may also be provided as part of device 100.

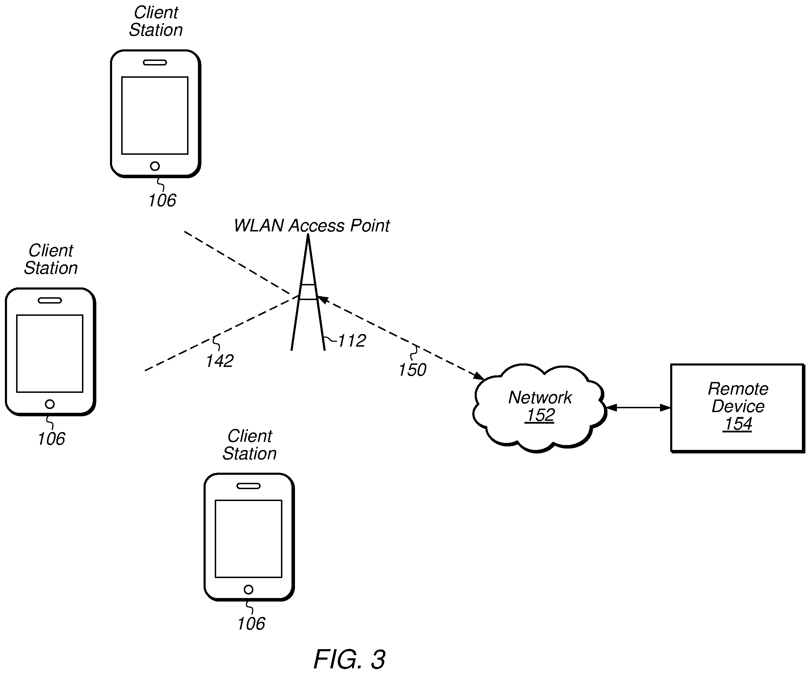

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 may be a Wi-Fi access point. The AP 112 may communicate via a wired and/or a wireless communication channel 150 with one or more other electronic devices (not shown) and/or another network 152, such as the Internet. Additional electronic devices, such as the remote device 154, may communicate with components of the WLAN system via the network 152. For example, the remote device 154 may be another wireless client station, a server associated with an application executing on one of the STAs 106, etc. The WLAN system may be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which may be an exemplary implementation of device 100) may be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

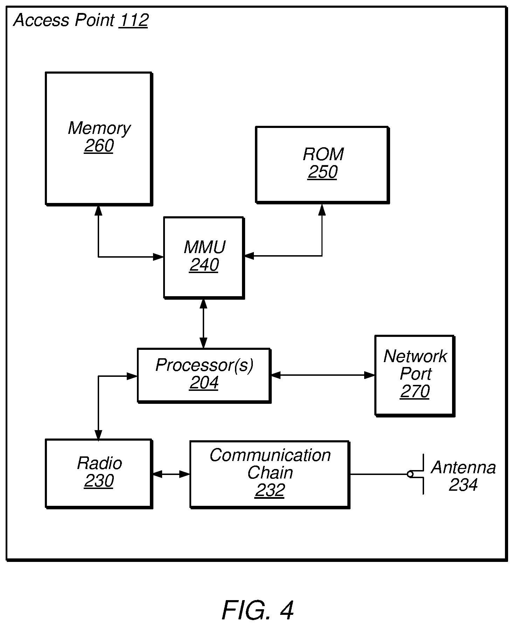

### Figure 4 - Access Point Block Diagram

Figure 4 illustrates an exemplary block diagram of an access point (AP) 112, which may be one possible exemplary implementation of the device 100 illustrated in Figure 4. It is noted that the block diagram of the AP of Figure 4 is only one example of a possible system. As shown, the AP 112 may include processor(s) 204 which may execute program instructions for the AP 112. The processor(s) 204 may also be coupled (directly or indirectly) to memory management unit (MMU) 240, which may be configured to receive addresses from the processor(s) 204 and to translate those addresses to locations in memory (e.g., memory 260 and read only memory (ROM) 250) or to other circuits or devices.

The AP 112 may include at least one network port 270. The network port 270 may be configured to couple to a wired network and provide a plurality of devices, such as mobile devices 106, access to the Internet. For example, the network port 270 (and/or an additional network port) may be configured to couple to a local network, such as a home network or an enterprise network. For example, port 270 may be an Ethernet port. The local network may provide connectivity to additional networks, such as the Internet.

The AP 112 may include at least one antenna 234, which may be configured to operate as a wireless transceiver and may be further configured to communicate with mobile device 106 via wireless communication circuitry 230. The antenna 234 communicates with the wireless communication circuitry 230 via communication chain 232. Communication chain 232 may include one or more receive chains, one or more transmit chains or both. The wireless communication circuitry 230 may be configured to communicate via Wi-Fi or WLAN, e.g., 802.11. The wireless communication circuitry 230 may also, or alternatively, be configured to communicate via various other wireless communication technologies, including, but not limited to, Long-Term Evolution (LTE), LTE Advanced (LTE-A), Wideband Code Division Multiple Access (WCDMA), etc., for example when the AP is co-located with a base station in case of a small cell, or in other instances when it may be desirable for the AP 112 to communicate via various different wireless communication technologies.

Further, in some embodiments, as further described below, AP 112 may be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

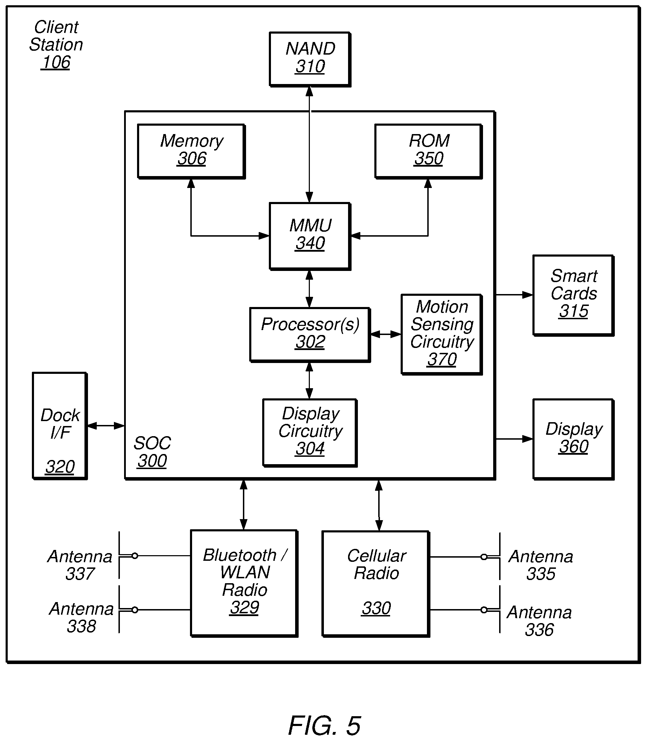

### Figure 5 - Client Station Block Diagram

Figure 5 illustrates an example simplified block diagram of a client station 106, which may be one possible exemplary implementation of the device 100 illustrated in Figure 4. According to embodiments, client station 106 may be a user equipment (UE) device, a mobile device or mobile station, and/or a wireless device or wireless station. As shown, the client station 106 may include a system on chip (SOC) 300, which may include portions for various purposes. The SOC 300 may be coupled to various other circuits of the client station 106. For example, the client station 106 may include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 may further include one or more smart cards 315 that incorporate SIM (Subscriber Identity Module) functionality, such as one or more UICC(s) (Universal Integrated Circuit Card(s)). The cellular communication circuitry 330 may couple to one or more antennas, such as antennas 335 and 336 as shown. The short to medium range wireless communication circuitry 329 may also couple to one or more antennas, such as antennas 337 and 338 as shown. Alternatively, the short to medium range wireless communication circuitry 329 may couple to the antennas 335 and 336 in addition to, or instead of, coupling to the antennas 337 and 338. The short to medium range wireless communication circuitry 329 may include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 may be used for ranging communications, e.g., using WLAN, Bluetooth, and/or cellular communications.

As shown, the SOC 300 may include processor(s) 302, which may execute program instructions for the client station 106 and display circuitry 304, which may perform graphics processing and provide display signals to the display 360. The SOC 300 may also include motion sensing circuitry 370 which may detect motion of the client station 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 may be configured to perform memory protection and page table translation or set up. In some embodiments, the MMU 340 may be included as a portion of the processor(s) 302.

As noted above, the client station 106 may be configured to communicate wirelessly directly with one or more neighboring client stations. The client station 106 may be configured to communicate according to a WLAN RAT for communication in a WLAN network, such as that shown in Figure 3 or for ranging as shown in Figure 1.

As described herein, the client station 106 may include hardware and software components for implementing the features described herein. For example, the processor 302 of the client station 106 may be configured to implement part or all of the features described herein, e.g., by executing program instructions stored on a memory medium (e.g., a non-transitory computer-readable memory medium). Alternatively (and/or in addition), processor 302 may be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320,329, 330, 335, 336, 337, 338, 340, 350, 360, 370 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 204.

Further, as described herein, cellular communication circuitry 330 and short-range wireless communication circuitry 329 may each include one or more processing elements. In other words, one or more processing elements may be included in cellular communication circuitry 330 and also in short range wireless communication circuitry 329. Thus, each of cellular communication circuitry 330 and short-range wireless communication circuitry 329 may include one or more integrated circuits (ICs) that are configured to perform the functions of cellular communication circuitry 330 and short-range wireless communication circuitry 329, respectively. In addition, each integrated circuit may include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which may be one possible exemplary implementation of the device 100 illustrated in Figure 6. As shown, the wireless node 107 may include a system on chip (SOC) 400, which may include portions for various purposes. For example, as shown, the SOC 400 may include processor(s) 402 which may execute program instructions for the wireless node 107, and display circuitry 404 which may perform graphics processing and provide display signals to the display 460. The SOC 400 may also include motion sensing circuitry 470 which may detect motion of the wireless node 107, for example using a gyroscope, accelerometer, and/or any of various other motion sensing components. The processor(s) 402 may also be coupled to memory management unit (MMU) 440, which may be configured to receive addresses from the processor(s) 402 and translate those addresses to locations in memory (e.g., memory 406, read only memory (ROM) 450, flash memory 410). The MMU 440 may be configured to perform memory protection and page table translation or set up. In some embodiments, the MMU 440 may be included as a portion of the processor(s) 402.

As shown, the SOC 400 may be coupled to various other circuits of the wireless node 107. For example, the wireless node 107 may include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, GPS, etc.).

The wireless node 107 may include at least one antenna, and in some embodiments, multiple antennas 435 and 436, for performing wireless communication with base stations and/or other devices. For example, the wireless node 107 may use antennas 435 and 436 to perform the wireless communication. As noted above, the wireless node 107 may in some embodiments be configured to communicate wirelessly using a plurality of wireless communication standards or radio access technologies (RATs).

The wireless communication circuitry 430 may include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 may be capable of performing cellular communication according to one or more cellular communication technologies. Some or all components of the wireless communication circuitry 430 may be used for ranging communications, e.g., using WLAN, Bluetooth, and/or cellular communications.

As described herein, wireless node 107 may include hardware and software components for implementing embodiments of this disclosure. For example, one or more components of the wireless communication circuitry 430 (e.g., Wi-Fi Logic 432) of the wireless node 107 may be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

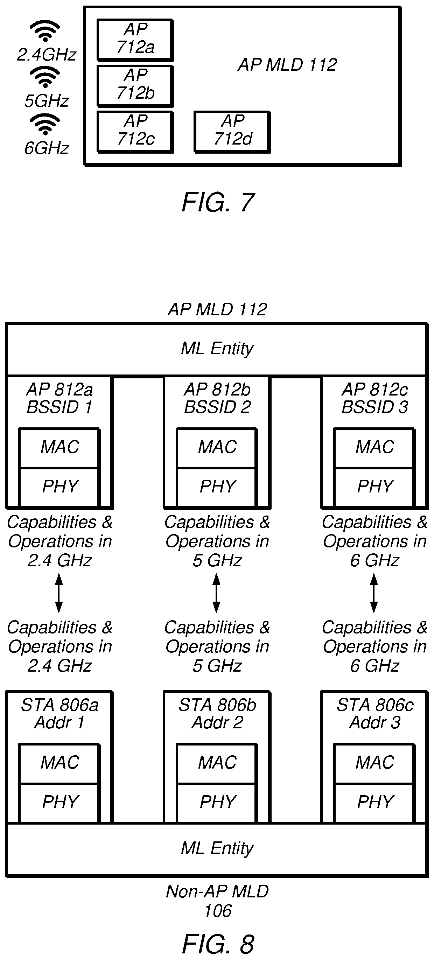

### Figures 7-8 - Multi-Link Device (MLD) operation

IEEE 802.11bi may include Multi-link Device (MLD) capabilities. In current implementations, an access point (AP) MLD node may manage its affiliated APs. Thus, an AP MLD node may modify, add, and/or subtract affiliated APs to increase capacity, manage Basic Service Sets (BSSs) interference and coverage, include switching APs to operate in channels with less interference, and/or steer associated non-AP MLD nodes to operate on better performing APs and/or AP MLD nodes.

Figure 7 illustrates an AP MLD 112, according to some embodiments. The AP MLD may operate any number of affiliated APs, e.g., APs 712a, 712b, 712c, and 712d in the illustrated example. The affiliated APs may operate on any of various frequency bands. Affiliated APs may operate on different frequency ranges (e.g., channels) of the same band or on different frequency bands.

The AP MLD may provide the affiliated APs from a single physical device (e.g., a single shared housing and potentially using the same antenna(s)). In some embodiments, the AP MLD may provide the APs from multiple distinct devices (e.g., a first device may provide one or more APs and a second device may provide one or more different APs, etc.). In some embodiments, various affiliated APs may be separated spatially (e.g., using beams in different directions, using different antennas with a shared housing (e.g., antennas of a same physical device), and/or of different devices, etc.).
In some embodiments, spatially separated affiliated APs may operate on a same (or overlapping) channel(s).

Figure 8 illustrates an AP MLD 112 in communication with a non-AP MLD 106, according to some embodiments.
As illustrated, the AP MLD 112 may operate three affiliated APs. For example, AP 812a may operate in a 2.4 GHz band, AP 812b may operate in a 5 GHz band, and AP 812c may operate in a 6 GHz band. Furthermore, any number of affiliated APs may be used in any combination of bands. For example, the AP MLD may operate multiple affiliated APs in one band and/or may not operate any affiliated APs in a band. The affiliated APs may include various layers such as media access control (MAC) and/or physical (PHY) layers, among various possibilities. The affiliated APs may use different basic service sets (BSS) and/or different BSS identifiers (BSSID) such as BSSIDs 1-3 illustrated in Figure 8.

As illustrated, the non-AP MLD 106 may operate three affiliated STAs corresponding to the three affiliated APs. For example, STA 806a may operate in the 2.4 GHz band, STA 806b may operate in a 5 GHz band, and STA 806c may operate in a 6 GHz band. The STAs may communicate with corresponding APs (e.g., STA 806a may communicate with AP 812a, STA 806b may communicate with AP 812b, etc.). Furthermore, any number of affiliated STAs may be used in any combination of bands. For example, the non-AP MLD may operate multiple affiliated STAs in one band and/or may not operate any affiliated STAs in a band. The non-AP MLD may operate STAs corresponding to some, none, or all of the APs of the AP MLD. The affiliated STAs may include various layers such as PHY and/or MAC layers, among various possibilities. The affiliated STAs may use different addresses such as Addr 1-3 illustrated in Figure 8.

The non-AP MLD may provide the affiliated STAs from a single physical device(e.g., a single shared housing and potentially using the same antenna(s)). In some embodiments, the non-AP MLD may provide the STAs from multiple distinct devices (e.g., a first device may provide one or more STAs and/or a second device may provide one or more different one or more STAs, etc.). In some embodiments, various affiliated STAs may be separated spatially (e.g., using beams in different directions, using different antennas with a shared housing (e.g., antennas of a same physical device), and/or of different devices, etc.).

The various affiliated STAs and APs may communicate concurrently / simultaneously. For example, STA 806a may exchange uplink and/or downlink data with AP 812a on a first link while STA 806b exchanges uplink and/or downlink data with AP 812b on a second link, etc. Furthermore, concurrent communication may include different data being exchanged at the same time, overlapping times, and/or different times on different links. For example, data between the AP MLD and non-AP MLD may be routed over the first available link and/or a link selected based on other criteria (e.g., lowest energy use, etc.). Additionally or alternatively, a first packet or portion of data may be sent over a first link and concurrently a second packet or portion of data may be sent over a second link.

In some embodiments, the AP MLD and non-AP MLD may include respective multi-link (ML) entities. An ML entity may provide upper MAC functionality that controls the separate APs and/or STAs and may additionally or alternatively control traffic delivery through available links (e.g. between the various APs and STAs). Furthermore, the respective MLDs (e.g., AP and non-AP) may have only one respective MAC service access point (SAP) interface and the ML entity may manage this SAP interface. Additionally, the ML entity may also manage transmission buffering (e.g., bookkeeping and link selection in the transmitter) and data re-order buffering in reception (e.g., combination of the data that is transmitted in different links).

According to some embodiments, the AP MLD 112 and non-AP MLD 106 may exchange information about their respective operations, operating parameters, and/or capabilities.
For example, the non-AP MLD may have various capabilities for operating a STA in a particular band. The capabilities may be different for different bands. For example, the capabilities in a band may be associated with one or more maximum (e.g., fastest, most flexible, most powerful, highest throughput, etc.) parameter values that a STA of the non-AP MLD may use. Operations or operating parameters may describe the parameter values that are currently in use or may be planned to be in use at a future time.

For example, the parameters (e.g., parameter values) may include an applicable physical (PHY) version and its associated parameters. The parameters may describe supported services and transmission formats that are available. Additionally or alternatively, the parameters may describe available resources, bandwidths and number of spatial streams. In some embodiments, the parameters may describe power save support parameters which may enable low power transmissions. For instance, an AP may support Target Wake Time (TWT) power save operations or functionality.

In some embodiments, the links may be located so closely (e.g., spatially and/or in frequency) that non-AP STA may not operate them independently (e.g., due to limits of the device and/or to manage resources or performance). Additionally, some APs may support STAs (e.g., non-AP MLDs) that are not capable of simultaneously transmitting and receiving on the link pair, according to some embodiments.

In some embodiments, the non-AP MLD may operate STAs communicating with multiple AP-MLDs. For example, a first STA may communicate with a first AP MLD and a second STA may communicate with a second AP MLD. Similarly, an AP MLD may communicate with multiple STAs. For example, one affiliated AP may communicate with multiple STAs.

In the illustrated example, the non-AP MLD operates a number of STAs equal to the number of APs provided by the AP MLD. However, different numbers are possible. For example, the AP MLD may provide more APs than the number of STAs operated by the non-AP MLD or vice versa. The number of APs and/or number of STAs may change over time.

According to some embodiments, it may be beneficial for client privacy enhanced (CPE) stations (STAs) or clients to change or adjust certain parameters used for performing communications with an AP. For example, eavesdroppers (e.g., cybercriminals, hackers, etc.) may seek to intercept, extract or listen in on communications between CPE STAs and APs (as one example of various other device to device communications). Accordingly, clients may seek to perform more secure communications between the CPE STAs and APs using various techniques involving address changing or related parameter adjustments.

For example, when reassociating from one CPE AP to another CPE AP, it may be beneficial for a CPE Client to change its own over-the-air (OTA) media access control (MAC) address used for communicating with an AP . Additionally or alternatively, it may be beneficial for a CPE Client to initiate changing its own OTA MAC address used with a CPE AP in an associated state (e.g., STA State 4) without any loss of connection. In some embodiments, it may be further beneficial for a CPE Client to initiate changing the OTA MAC addresses of all associated CPE Client's in the base station system (BSS) (e.g., those CPE Clients in associated STA State 4) simultaneously without any loss of connection. Furthermore, it may be beneficial for a CPE client and CPE AP to change the transmitted sequence number (SN), packet number (PN) and transaction identifier (TID) to an uncorrelated new value on downlink and uplink to new values in an associated STA State 4, without any loss of connection, according to some embodiments. Moreover, it may be further beneficial for a CPE Client and CPE AP to change the CPE Client's association identifier (AID) to an uncorrelated new value in an associated STA State 4, without any loss of connection. Some or all of these described changes may be useful in providing increased security of communications between CPE STAs and APs through making eavesdropping by unwanted persons more difficult.

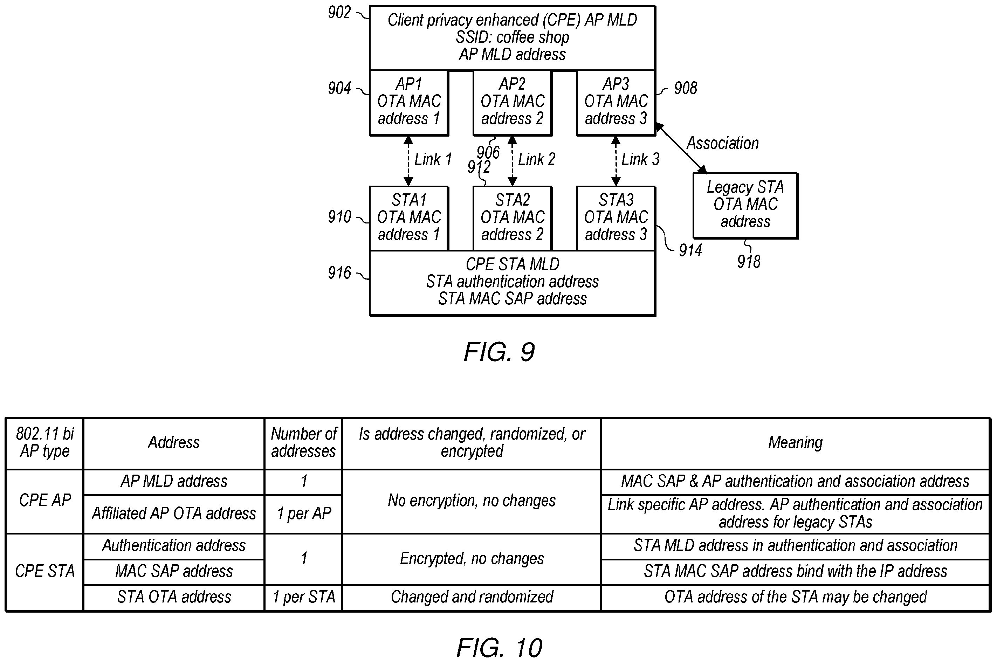

### Figures 9-10 - Example Client Privacy Enhanced (CPE) AP MLD and STA MLD Architectures for Address Changing

Figure 9 illustrates an example communication architecture of a CPE AP MLD 902 and a CPE STA MLD 916. More specifically, Figure 9 illustrates that the CPE AP MLD 902 may be associated with a service set identifier (SSID) such as a "coffee shop" with a corresponding AP MLD address. Moreover, the CPE AP MLD 902 may have various APs (e.g., in the coffee shop) such as AP1 904, AP2 906, and AP3 908 with corresponding and respective OTA MAC addresses shown as OTA MAC address 1 (for AP1 904), OTA MAC address 2 (for AP2 906), and OTA MAC address 3 (for AP3 908). Furthermore, the CPE AP MLD may be in communication with a CPE STA MLD 916 corresponding to multiple STAs (e.g., STA 1 910, STA 2 912, and STA 3 914), a STA authentication address, and a STA MAC SAP address. For example, AP1 904 may communicate with a corresponding STA1 910 corresponding to OTA MAC address 1 via Link 1, AP2 906 may communicate with a corresponding STA2 912 corresponding to OTA MAC address 2 via Link 2, and AP3 908 may communicate with a corresponding STA3 914 corresponding to OTA MAC address 3 via Link 3. According to some embodiments, some APs may be able to maintain or support legacy STA OTA MAC address associations as shown between 918 and AP3 908.

Figure 10 illustrates example 802.11bi AP types, their associated addresses, as well as the effects of changing, randomizing, or encrypting said addresses. More specifically, Figure 10 illustrates that a CPE AP may have at least one of an AP MLD address corresponding to one address or an affiliated AP OTA address corresponding to one address per AP. Regarding the AP MLD address, the address may not be encrypted or changed and therefore the AP MLD address would be associated with the MAC SAP AP authentication and association address of the STA (e.g., STA 916), according to some embodiments. Additionally or alternatively, regarding the affiliated AP OTA address, the AP OTA address would correspond to a link specific AP address as shown in Figure 9. According to some embodiments, a legacy STA may correspond to an AP authentication and association address as shown between 918 and AP3 908.

Additionally, Figure 10 illustrates that a CPE STA may have at least one of an authentication address or MAC SAP address each corresponding to one address or STA OTA address corresponding to one address per STA. Regarding the authentication address, it may be encrypted but without changes to the address and therefore it may correspond to a STA MLD address in authentication and association, according to some embodiments. In some embodiments regarding the MAC SAP address, the address may also be encrypted but not changed and therefore the STA MAC SAP address may be bound with the internet protocol (IP) address. Additionally or alternatively, the STA OTA address (e.g., STAs 1-3 of Figure 9) may be changed and randomized, according to some embodiments.

According to some embodiments, the AP MLD and STA MLD communication architecture may include a legacy compatible CPE AP MLD. For example, some CPE AP MLDs may support Wi-Fi 7 / 802.11be MLD architectures. Additionally or alternatively, some CPE APs may associate with CPE STAs, Wi-Fi 7 compatible STA MLDs and/or other legacy STAs.

Furthermore, CPE APs and CPE STAs may have privacy improvements for individually addressed data and management frames. For example, some addresses may be changed in a post-association mode, according to some embodiments. Additionally or alternatively, MAP SAP address and authentication addresses may have the same value, according to some embodiments.

Accordingly, there may be various options for changing OTA addresses in a post-association mode. For example, link specific offset address changes may involve the STA and/or AP modifying a frame after encryption for each link. In other words, the OTA addresses of different links may be changed at different times and the duration of the address changes may to correspond to specified durations in time or utilize configured timers, according to some embodiments. Accordingly, these link address transitions at different times may allow for easier and faster address changes. Furthermore, the AP and STA may agree on a joint schedule to change OTA addresses and calculate new address values for each address change, according to some embodiments. Moreover, the transmitter and receiver may need the capability to modify encrypted frames because for link specific address changes (offset in time), the encrypted packets are changed before they are transmitted OTA. Furthermore and regarding the privacy benefits of this approach, an eavesdropper would likely not be able to combine STAs in the links to be part of the same MLD in order to intercept or extract communications between the STA and AP.

### Enhanced Address Changing in Wireless Networking Systems

As one option, it may be possible to change an OTA MAC address before encryption occurs. For example, similar to an association setup (without the association signaling) procedure, the OTA MAC addresses may be changed on all links at the same time, according to some embodiments. In other words, the OTA MAC address may be capable of being changed on all links by reusing the association mechanism such that main operations of the transmitter and receiver are not significantly impacted. Furthermore, the AP and STA may agree on a joint schedule to change all of the OTA addresses and calculate new address values for each address change, according to some embodiments. Furthermore, the duration of the address changes may to correspond to specified lengths of time or utilize configured timers, according to some embodiments. However, regarding the privacy aspects of this approach, it may be possible for eavesdroppers to detect which STAs belong to the same STA MLD by using intercepted SN and PN values. Moreover, in some embodiments, the change of OTA addresses of all links may take a longer time than changing the OTA addresses of different links at different times (as previously described).

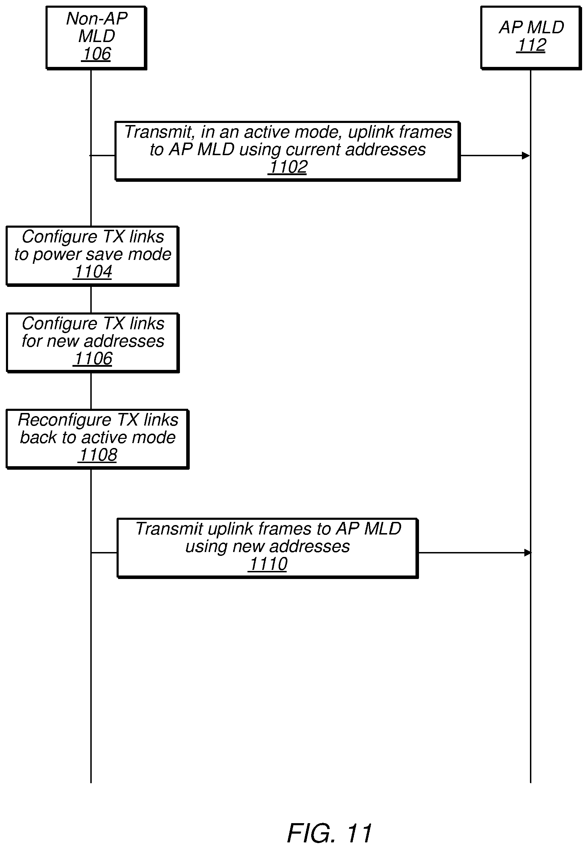

### Figure 11 - Example Method of Address Changing by MLDs

Figure 11 is a communication flow diagram illustrating an example method of address changing by MLDs, according to some embodiments. More specifically, Figure 11 illustrates an embodiment directed toward systems, methods, and mechanisms for non-AP MLDs to perform address changing of one or more transmission (TX) links during a power conservation mode. Such techniques may aid in providing reduced latency, reduced power consumption, and/or improved security.

Aspects of the method of Figure 11 may be implemented by a non-AP MLD (e.g., non-AP MLD 106) in communication with an AP MLD (e.g., AP MLD 112). The AP MLD and/or non-AP MLD may be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device may be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) may cause a wireless device, STA, UE, non-AP MLD, and/or AP MLD, or other device to perform such method elements.

Note that while at least some elements of the method of Figure 11 are described in a manner relating to the use of communication techniques and/or features associated with IEEE and/or 802.11 (e.g., 802.11bi) specification documents, such description is not intended to be limiting to the disclosure, and aspects of the method of Figure 11 may be used in any suitable wireless communication system, as desired. Similarly, while elements of the method of Figure 11 are described in a manner relating to non-AP MLDs, such description is not intended to be limiting to the disclosure, and aspects of the method of Figure 11 may be used by STAs that are not MLDs, as desired.

The methods shown may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

In 1102, a non-AP MLD may transmit, using one or more respective transmission (TX) links in an active mode, one or more uplink frames to an AP MLD using one or more respective addresses corresponding to one or more respective reception (RX) links of the AP MLD. For example, a STA may be in communication with an AP and be transmitting frames using currently configured addresses, according to some embodiments.

In 1104, the non-AP MLD may configure the one or more respective TX links to a mode corresponding to power conservation (e.g., a power save mode). For example, the STA may configure the TX links such that they move from an active mode or state (e.g., transmitting) to a power save mode corresponding to reduced or minimal transmissions of frames, according to some embodiments.

In 1106, the non-AP MLD may configure the one or more respective TX links with one or more new respective addresses corresponding to the one or more respective RX links. In other words, the STA may, while they are in a power save mode, configure the TX links with new addresses with which to perform subsequent transmissions to the AP, according to some embodiments.

In 1108, the non-AP MLD may reconfigure the one or more respective TX links back to the active mode. For example, a STA may, having configured the TX links with new addresses during the power save mode, reconfigure them out of the power conservation mode and back to the active mode or state such that they can once again be used to perform subsequent transmissions with the AP, according to some embodiments.

In 1110, the non-AP MLD may transmit, to the AP MLD, one or more additional uplink frames using the one or more new respective addresses. For example, having configured the appropriate TX links with the new addresses, the STA may continue or resume transmissions to the AP using the newly configured addresses, according to some embodiments.

According to some embodiments, the non-AP MLD may be configured to select a time to concurrently configure the one or more respective TX links to the mode corresponding to power conservation. Additionally or alternatively, the non-AP MLD may be configured to select a time to concurrently configure the one or more respective TX links with the one or more new respective addresses corresponding to the one or more respective RX links.

In some embodiments, the non-AP MLD may receive, before or while configured for the mode corresponding to power conservation, one or more frames from the AP MLD corresponding to the one or more respective addresses of the one or more respective RX links. Additionally or alternatively, the non-AP MLD may buffer the one or more frames and configure them with the one or more new respective addresses. Accordingly, the non-AP MLD may then transmit, to the AP MLD, the one or more frames using the one or more new respective addresses, according to some embodiments.

According to further embodiments, the one or more addresses and one or more new addresses may be media access control (MAC) addresses. Additionally or alternatively, the one or more new addresses may be generated using one or more randomized identifiers.

In some embodiments, the non-AP MLD may be configured to transmit an Addresses Configure Request to the AP MLD. Additionally or alternatively, the Addresses Configure Request may include at least one of uplink salt values, link information, or address change times, according to some embodiments. According to some embodiments, salt values may be characterized as randomly generated values that may be added to the input of one or more hash functions to create one or more distinct or unique hashes (e.g., hash functions). In other words, a salt (e.g., a salt value) may be characterized as random data that is used as an additional input to a function (e.g., a one-way function) that hashes data (e.g., such as a password, as one example). Furthermore, the non-AP MLD may be configured to receive an Addresses Configure Response from the AP-MLD. In some embodiments, the Addresses Configure Response may include at least one of downlink salt values, link information, or an approval or indication of address changes.

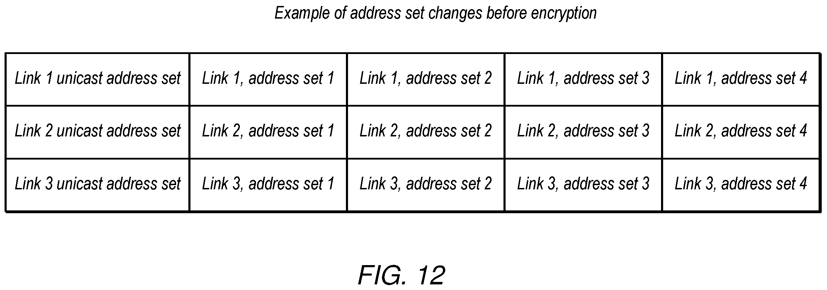

The method of Figure 11 may further correspond to the example of address set changes before encryption as shown in Figure 12, according to some embodiments. For example, Figure 12 illustrates different unicast link address sets such as Link 1 unicast address set (corresponding to Link 1, address set 1, Link 1, address set 2, Link 1, address set 3, and Link 1, Address set 4). Similarly, the Link 2 unicast address set corresponds to Link 2, Address sets 1-4 and the Link 3 unicast address set corresponds to Link 3, Address sets 1-4 as shown in Figure 12.

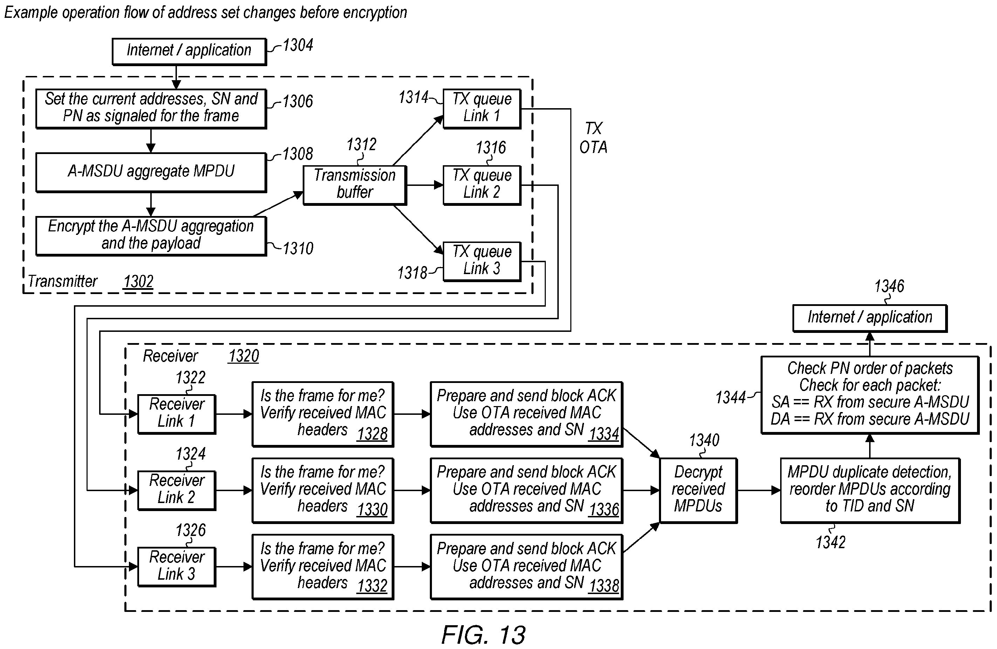

The method of Figure 11 may further correspond to the example flow chart of an address change before encryption as shown in Figure 13, according to some embodiments. For example, Figure 13 illustrates that a transmitter 1302 (e.g., a STA or non-AP MI,D) may be running or operating an application or internet browser 1304 which sets the current address, sequence number (SN) and packet number (PN) for a frame in 1306 as signaled by the application/internet 1304. Accordingly, the aggregated MAC-level Service Data Unit (A-MSDU) may aggregate the corresponding MAC-level Protocol Data Units (MPDUs) of the frame in 1308 and further encrypt the A-MSDU aggregation and the payload in 1310, according to some embodiments. The transmission buffer 1312 may then receive the encrypted frame and/or payload and A-MSDU and enter TX queue link 1 (e.g., 1314), TX queue link 2 (e.g., 1316), and TX queue link 3 (e.g., 1318) for transmission over the air to the receiver 1320.

Accordingly, the receiver 1320 may receive the transmissions of the TX links via receiver link 1 (e.g., 1322), receiver link 2 (e.g., 1324), and receiver link 3 (e.g., 1326). The receiver 1320 may then respectively verify in 1328, 1330, and 1332 (for the respective receiver links 1322, 1324, and 1326) that it has received appropriately addressed frames by verifying the received MAC headers of the frames. Once verified, the receiver 1320 may then prepare and send respective block acknowledgements (ACKs) using the respective OTA received MAC addresses and SNs in 1334, 1336, and 1338 to indicate to the transmitter that it has performed successful reception. Furthermore, the receiver 1320 may then decrypt the received MPDUs at 1340 as well as perform detection of duplicate MPDUs and reordering of said MPDUs according to the transaction identifiers (TIDs) and SNs in 1342, according to some embodiments.

Furthermore, the receiver 1320 may then check or verify the PN order of packets at 1344. For example, the receiver may verify for each packet that the sender address (SA) and destination address (DA) and has been received from a secure A-MSDU, according to some embodiments. Accordingly, once these have been verified, the packets may be delivered to the Internet / application 1346 from the receiver side.

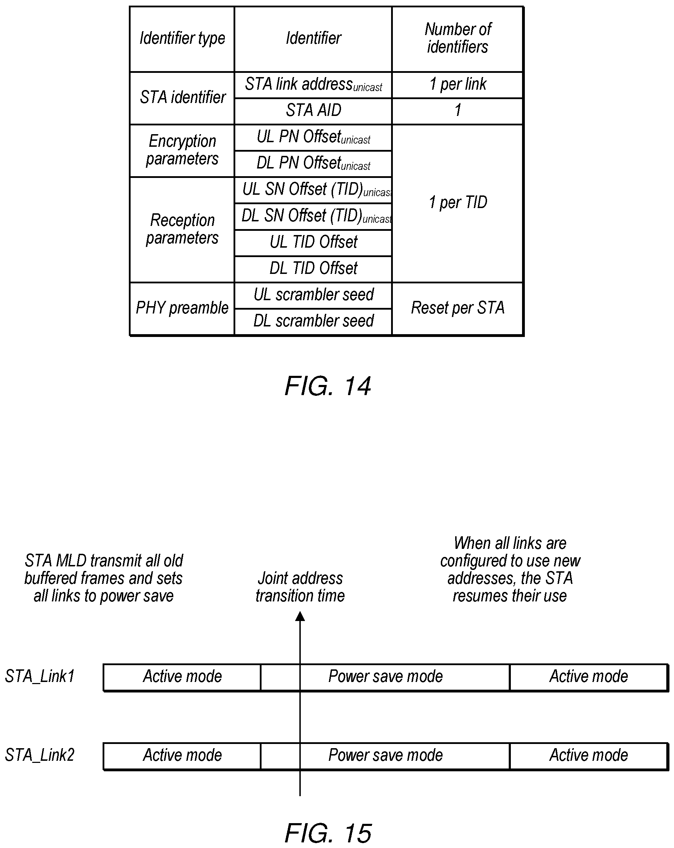

The method of Figure 11 may further involve an example of over-the-air (OTA) unicast address set randomization as described in Figure 14, according to some embodiments. More specifically, Figure 14 illustrates the number of randomized identifiers in individually addressed frames, according to some embodiments. For example, for a STA identifier type such as a STA link address_{unicast} may correspond to one identifier per link as opposed to a STA association identifier (AID) of the same type which may correspond to just one identifier, according to some embodiments. Alternatively, for link specific OTA address offsets after encryption, a STA identifier type such as a STA link address_{unicast} and a STA AID of the same type may correspond to one identifier per STA. Additionally or alternatively, for identifier types such as encryption parameters, UL or DL PN Offset_{unicast} identifiers may correspond to one identifier per TID. Similarly, for identifier types such as reception parameters, UL or DL SN Offset (TID)_{unicast} as well as UL or DL TID offset identifiers may correspond to one identifier per TID. Furthermore,the physical (PHY) preamble identifiers UL and DL scrambler seeds may be associated with a number of identifiers which are reset on a per-STA basis.

Accordingly, randomizing STA OTA MAC addresses may not be enough to deter or stop eavesdroppers since they may be able track the CPE STA from a scrambler seed, SN, and/or PN due to these values steadily increasing as a function of transmitted frames. Moreover, since both UL and DL unicast frames parameters should be changed when the MAC address is changed, each direction (e.g., UL and DL) may have steadily increasing values.

The method of Figure 11 may be further described through the illustration of Figure 15, according to some embodiments. More specifically, Figure 15 illustrates how a STA may perform address set changes on all of its appropriate links at approximately the same time. For example, a STA MLD may have two links STA_Link1 and STA_Link2 which are operating in an active mode corresponding to transmissions of frames to an AP MLD, according to some embodiments. Furthermore, once the STA MLD has transmitted all of its buffered frames (corresponding to current or old addresses), the STA MLD may be configured to set all of its TX links to a power save or power conservation mode. According to some embodiments, a power management (PM) mode or parameter of the STA may correspond to certain values or bit values. For example, PM=1 may correspond to a power save mode associated with reduced or minimal transmissions while PM=0 or PM=2, 3, 4... N may correspond to various modes such as an active state or mode associated with performing transmissions to an AP, according to some embodiments. In some embodiments, the STA MLD and/or AP MLD may have previously determined or agreed upon a joint or concurrent address transition (e.g., an address change) time such that all the TX links corresponding address changes occur at a time during which the TX links (e.g., STA_Link1 and STA_Link2) are in power save mode. Additionally or alternatively, once the TX links have been configured with new addresses, the STA may configure the TX links to resume transmitting (and using the new or updated addresses) in an active mode or state.

In other words, a STA may be able to change or transition all its addresses at the same time by selecting a time when it does not have buffered UL frames with old addresses and setting all of its TX links to power save mode. In some scenarios, if new frames are received from the AP before or after the transition to the power save mode, the STA may buffer the frames and transmit the frames with new addresses after the address change. For example, the newly received frames from the AP may include internet protocol (IP) addresses, user datagram / transmission control protocols (UDP/TCP) in addition to payloads. Accordingly, after the address change, the STA may return to transmitting frames only with new addresses (as opposed to ones with the old addresses). In some embodiments, if the power save operation is sufficiently long, the AP may only send frames with new addresses to the STA.

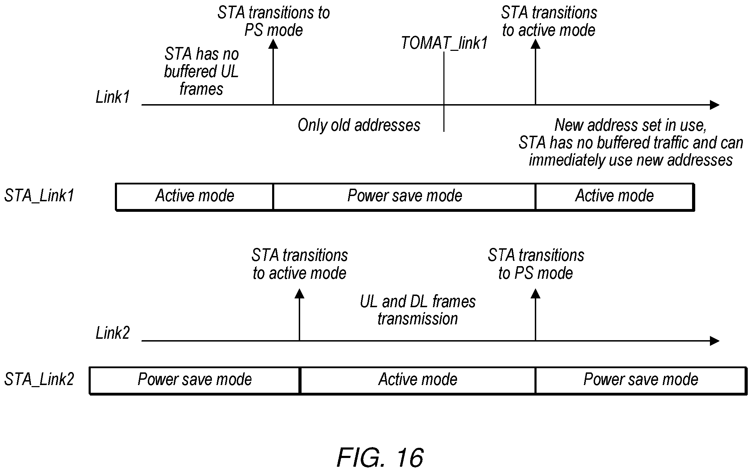

### Figure 16 - Changing Address Sets on Multiple Links at Different Times

Figure 16 illustrates an example of changing address sets on multiple links at different times. More specifically, Figure 16 illustrates how a STA may simplify the address change process by flexibly configuring different transmission links for power saving modes and active modes. For example, as illustrated in Figure 16, the STA may keep certain link (e.g., STA_Link1) specific transmission UL buffers empty at or near a determined address change time (e.g., a Target OTA MAC Time (TOMAT) such as TOMAT_Link1) and further set the address changing link into power save mode. The STA may use other links (such as STA_Link2) to continue to facilitate the UL and DL frame transmissions. Meanwhile, at the TOMAT corresponding to STA_Link1, the STA may configure STA_Link1 with new addresses and to enter an active mode. Accordingly, STA_Link1 may be once again operating in the active mode and may be further allowed to immediately begin using the newly configured addresses for subsequent transmissions.

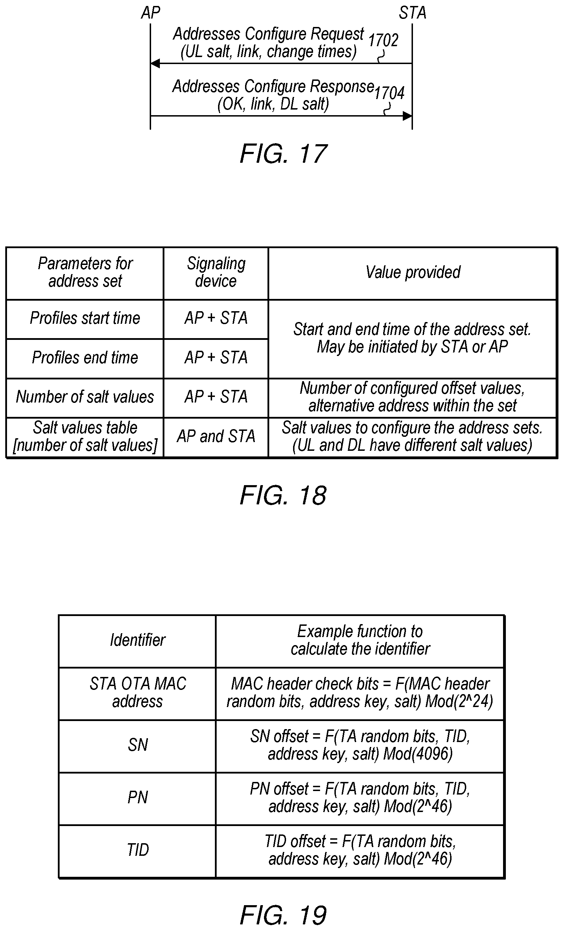

### Figures 17-19 - Signaling of New Address Set Values

Figures 17-19 illustrate example aspects and characteristics of signaling of new address set values, according to some embodiments. In some instances, the signaling illustrated in Figures 17, 18, and/or 19 may applicable to the method of Figure 11 (e.g., involving changing the address sets of all its links at the same time) and/or the technique illustrated in Figure 16 (e.g., involving changing address sets on multiple links at different times).

Figure 17 illustrates an example communication flow diagram between an AP and a STA related to address configuration. For example, the STA may transmit an Addresses Configure Request in 1702 to the AP corresponding to UL salt values, specified links, and specifying change times, according to some embodiments. Accordingly, the AP may transmit an Addresses Configure Response in 1704 including at least one of an indication of approval (e.g., "OK") or ACK as well as specifying links and providing DL salt value(s), according to some embodiments.

According to further embodiments, the new parameter values for address changing may be calculated. For example, a new salt value (e.g., in the Addresses Configure Request or Response) may allow the transmitter and receiver to calculate the new address, SN, PN and TID values. Moreover, the UL and DL may have different link specific salt values since the STA defines UL values and the AP defines DL values. In other words, the AP and STA may setup individual address sets in association due to the new address sets being configured using the Addressed Configure Request and Addressed Configure Response and the new parameter values being calculated using them.

Figure 18 illustrates various parameters that may be calculated based on information provided by the signaling devices. For example, profiles start and end time parameters for the address set for the AP and STA may correspond to a value being calculated or provided (or be initiated by the STA or AP) that specifies start and end times of the address, according to some embodiments. Additionally or alternatively, the number of salt values may be used to determine a value or number of configured offset values or alternative addresses within the address set. In some embodiments, a salt values table (e.g., a lookup table corresponding to the number of salt values) may be used to determine the salt values to configure the address sets.

Furthermore, identifiers may be able to be calculated by the AP and STA using functions and received or previously calculated identifiers. For example, as shown in Figure 19, the STA OTA MAC address identifier may use the function *"F*(*MAC Header random bits, Address Key, Salt) Mod* (2^24*)*" to calculate the number of bits in the MAC header, according to some embodiments. According to further embodiments, the STA or AP may calculate the SN Offset using the SN and the function *"F*(*TA random bits, TID, Address key, Salt* ) Mod(4096)". Additionally or alternatively, the PN and TID Offsets may be calculated using the functions *F* (*TA random bits, TID, Address key, Salt) Mod* (2^46) or *F* (*TA random bits, Address key, Salt) Mod* (2^46) respectively, according to some embodiments.

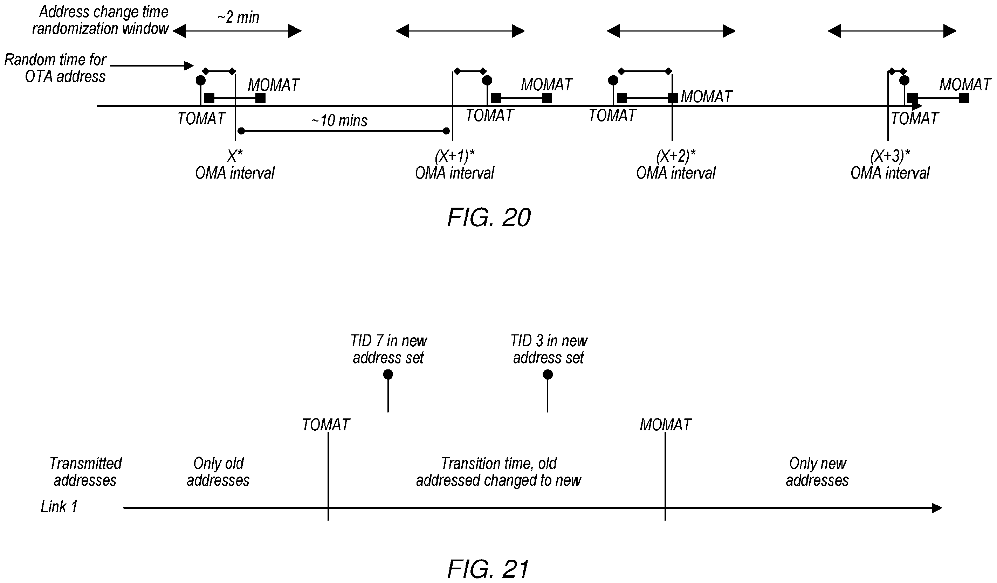

### Figure 20 - OTA MAC Address Change Scheduling

According to some embodiments, a STA (e.g., a non-AP MLD) may benefit from enhanced scheduling to perform OTA MAC address changes. For example, the STA may utilize various time parameters or windows to schedule and perform the OTA address changes. In some embodiments, the STA may utilize a Target OTA MAC Address Change Time (TOMAT). This TOMAT may be characterized by the function *TOMAT = X* * *OTA MAC Change interval + Max Random time* * *RandomTimeOffsetHASH*(*SN, salt, "random OTA MAC Change* and *RandomTimeOffsetHASH* may correspond to values of [-0.5,+0.5], according to some embodiments. Additionally or alternatively, each associated STA may have a different random offset for the next TOMAT, according to some embodiments.

Furthermore, an Address Change Request frame may include STA specific parameters such as *OTA MAC Change interval, Max Random time* and *Max OTA MAC address change time (MOMAT)* values. These values may be changed by re-associating or through a new protected management frameFor example, if an address change is performed through a re-association, the AP may need the STA to re-associate through a new management frame. According to some embodiments, the enhanced scheduling illustrated in Figure 20 may be used with the method of Figure 11 such that the address change before encryption changes addresses of all the TX links at the same time (e.g., the change time is the same for all links). Additionally or alternatively, the enhanced scheduling illustrated in Figure 20 may be used with the link offset mechanism such that the addresses for the links are separately updated for each link and at different times (e.g., as illustrated in Figure 16).

In some embodiments, randomization windows or random times for OTA address changes may be used with the TOMATs and MOMATs to further refine or define the OTA address changes. For example, OTA MAC intervals such as X*, (X+1)*, (X+2)*, and (X+3)* ... (X+N)* may be used to define periods of time between a MOMAT and a subsequent TOMAT. In some embodiments, the randomization window may be approximately two minutes while the OMA interval may be approximate ten minutes. These intervals and randomization windows may make it more difficult for eavesdroppers to intercept communications between the AP and STA and therefore provide further enhanced security benefits.

### Figure 21 - Direction and TID Specific OTA Address Change

According to some embodiments, TIDs and direction (e.g., UL or DL) may be used to change the address sets in transmission at different times. For example, the method of Figure 11 may utilize direction specific or TID specific transmissions to trigger an address change, according to some embodiments. Figure 21 illustrates an example scenario in which a STA or non-AP MLD may be transmitting old addresses and at some point the STA may receive a TOMAT. The STA may then receive a TID (e.g., TID 7) on a link (e.g., Link 1) corresponding to a new address set and subsequently configure the link for the new address set associated with TID 7. In some embodiments, the STA may receive an additional TID (e.g., TID 3) after TID 7 and before a MOMAT and once again configure the link for the new address set associated with TID 3. Accordingly, and following the MOMAT, the STA (e.g., non-AP MLD) may then perform subsequent transmissions using the newly configured address set. According to some embodiments, the direction (UL or DL) of the TID may also be used for determining whether or not to perform an address change. For example, the STA may be configured to perform an address change corresponding to received UL TIDs, according to some embodiments. Alternatively, the STA may be configured to perform an address change corresponding to received DL TIDs, according to some embodiments.

In some embodiments, an enhanced distributed channel access (EDCA) may be used to enable application client (AC) specific transmissions and quality of service (QoS) frameworks such that the direction specific or TID specific transmissions can be used to trigger an address change. Additionally, each link may have link specific address change times. For example, with regard to Figure 11 involving address change before encryption, the old addresses may be buffered to link specific transmission buffers. This may cause each link to switch to new address at different times. Furthermore, when performing address changing after encryption, each link may have a different offset and therefore each link switches to new addresses at different times, according to some embodiments.

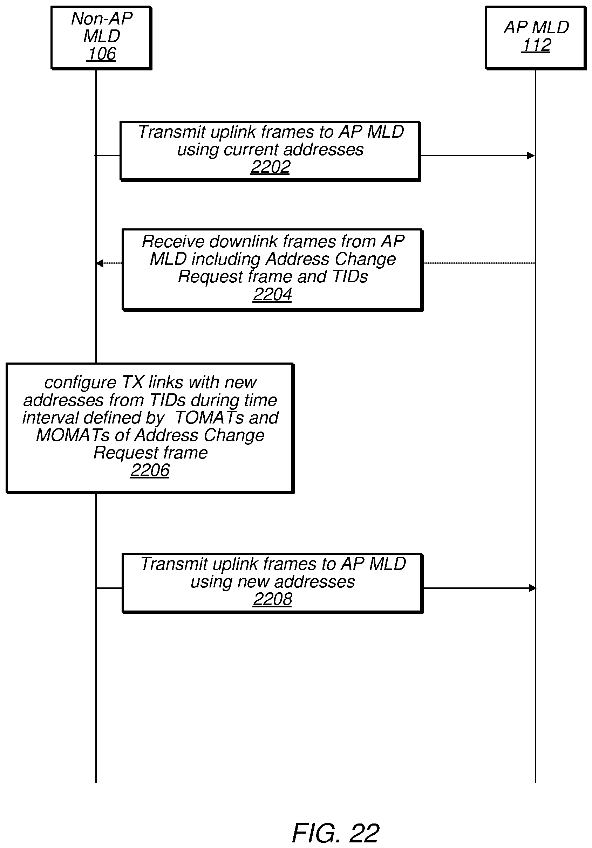

### Figure 22 - Example Method for Direction and TID Specific OTA MAC Address Changing

Figure 22 is a communication flow diagram illustrating an example method of direction and TID specific OTA MAC address changing, according to some embodiments. More specifically, Figure 22 illustrates an embodiment directed toward systems, methods, and mechanisms for non-AP MLDs to perform address changing of one or more transmission (TX) links using received TIDs. Such techniques may aid in reduced latency, reduced power consumption, and/or improved security.

Aspects of the method of Figure 22 may be implemented by a non-AP MLD (e.g., non-AP MLD 106) in communication with an AP MLD (e.g., AP MLD 112). The AP MLD and/or non-AP MLD may be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device may be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) may cause a wireless device, STA, UE, non-AP MLD, and/or AP MLD, or other device to perform such method elements.

Note that while at least some elements of the method of Figure 22 are described in a manner relating to the use of communication techniques and/or features associated with IEEE and/or 802.11 (e.g., 802.11bi) specification documents, such description is not intended to be limiting to the disclosure, and aspects of the method of Figure 22 may be used in any suitable wireless communication system, as desired. Similarly, while elements of the method of Figure 22 are described in a manner relating to non-AP MLDs, such description is not intended to be limiting to the disclosure, and aspects of the method of Figure 22 may be used by STAs that are not MLDs, as desired.

The methods shown may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

In 2202, a non-AP MLD may transmit, using one or more respective transmission (TX) links, one or more uplink frames to an AP MLD using one or more respective addresses corresponding to one or more respective reception (RX) links of the AP MLD. For example, a STA may be in communication with an AP and be transmitting frames using currently configured addresses, according to some embodiments.

In 2204, the non-AP MLD may receive, one or more downlink frames including one or more transaction identifiers (TIDs) and an Address Change Request frame, according to some embodiments. Additionally or alternatively, the Address Change Request frame may include information corresponding to one or more target over-the-air media access control address change times (TOMATs) and one or more maximum over-the-air media access control address change times (MOMATs), according to some embodiments. In some embodiments, the one or more TIDs may be associated with one or more new addresses corresponding to the one or more respective RX links of the AP-MLD. For example, a STA may receive information from the AP related to the timing or scheduling of performing an address change. Additionally or alternatively, the information may include new addresses to be used by the STA for subsequent transmissions, according to some embodiments.

In 2206, the non-AP MLD may configure, based on the one or more TIDs and during a time interval defined by the one or more TOMATs and the one or more MOMATs, the one or more respective TX links with the one or more new addresses, according to some embodiments. For example, the TOMAT may correspond to a target time for the STA to initiate or perform an address change for one or more TX links. Additionally or alternatively, the MOMAT may correspond to a maximum time at which the STA should have already performed an address change, according to some embodiments.

In 2208, the non-AP MLD may transmit, to the AP MLD, one or more additional frames using the one or more respective new addresses, according to some embodiments. For example, having configured the appropriate TX links during the specified time window and using the new addresses indicated in the TIDs, the STA may continue or resume transmissions to the AP using the newly configured addresses.

According to some embodiments, MOMATs or TOMATs may be altered or changed by re-associating or via a protected management frame. In other words, various parameters of the MOMATs or TOMATs may be configured to such that the scheduling of the address change can be flexibly change. For example, the target time (e.g., TOMAT) may be extended or changed to a later time so as to allow the non-AP MLD more time to perform additional operations (prior to or during power saving mode). Additionally or alternatively, the TOMAT may be decreased such that the address change is performed quickly after entering the power save mode. In some embodiments, the MOMAT may be decreased such that the address change is performed before a maximum allowed time has elapsed. Additionally or alternatively, the MOMAT may be increased so as to allow the non-AP MLD additional time to perform the address change or other procedures under various scenarios. For example, large amounts of data traffic may correspond to longer address change times, according to some embodiments.

In some embodiments, new addresses may be calculated by the AP MLD or the non-AP MLD using one or more salt values. For example, the AP MLD or non-AP MLD may generate salt values corresponding to a various randomly generated values and lengths. Additionally, the salt value may be used as an input in a function for hashing data. Accordingly, utilizing the hashed values and salt values may provide a way to generate more secure and/or random addresses to be used for address changes. In some embodiments, the salt values may be usable by the AP MLD or non-AP MLD to calculate one or more sequence numbers (SNs), one or more packet numbers (PNs), or one or more transaction identifiers (TIDs) of various frames. Additionally or alternatively, uplink salt values may correspond to the respective TX links of the non-AP MLD and downlink salt values may correspond to the one or more respective RX links of the AP MLD. According to some embodiments, an address change time (e.g., TOMAT) may be calculated by at least one of the STA or the AP. Additionally or alternatively, when the TOMAT or address change time is calculated, the AP and STA may not have exchanged any frames related to the address change, according to some embodiments.

In some embodiments, the respective TX links may be configured concurrently in time with respective new addresses corresponding to the RX links of the AP-MLD. Additionally or alternatively, the TX links may be configured separately in time from the new addresses corresponding to the RX links of the AP-MLD. Furthermore, the TX links may be configured with the new addresses corresponding to the RX links of the AP-MLD based on at least one of one or more transmission directions or the one or more TIDs.

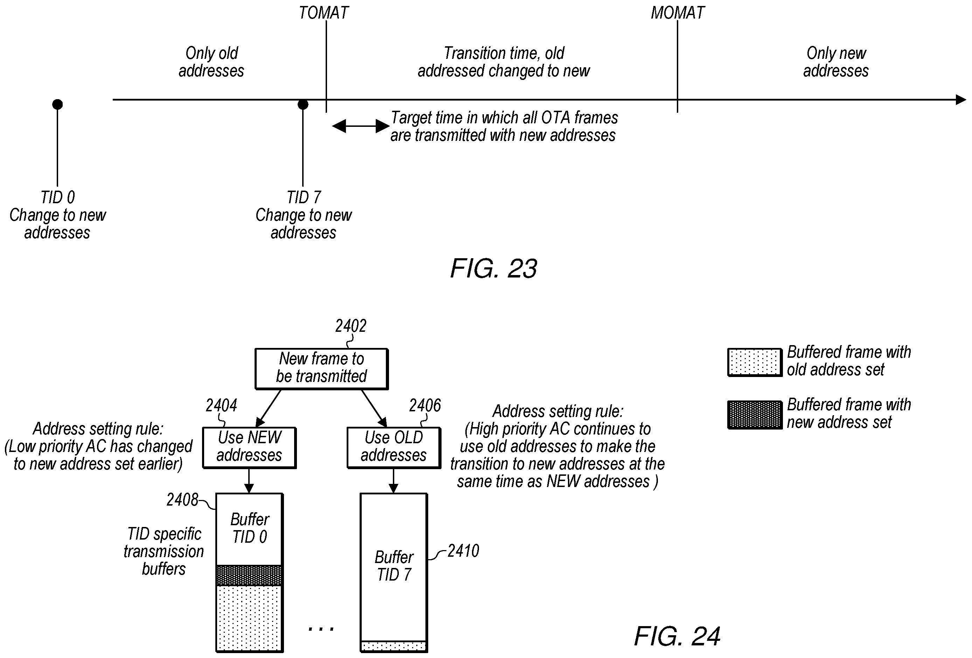

### Figures 23-24 - Controlling Address Assignments for Packets

Figures 23-24 illustrate example aspects of address changing by controlling the old and new address assignments for the packet, according to some embodiments.

In some embodiments, transmitters may have a large quantity of low priority traffic to buffer. However, if the transmitter starts to use the new addresses for all TIDs at the same time, it could result in lower priority TIDs (e.g., corresponding to a low priority AC) frames with old addresses taking a longer time to transmit than higher priority TIDs. Additionally, this scenario may occur more frequently when there are large amounts of data traffic being transmitted in bursts with ACs of differing priorities. Accordingly, it may be beneficial for the transmitter to minimize address handling complexity as well as reducing the chance of eavesdroppers detecting the address change by shortening the time when some TIDs use old addresses and other TIDs use new addresses.

For example, as illustrated in Figure 23, a STA may be transmitting frames using old address and receive multiple TIDs (e.g., TID 0 and TID 7) before a TOMAT. These multiple TIDs may be received at different times and be further associated with new addresses. Accordingly, after the TOMAT, the STA may configure one or more of its TX links with the new addresses associated with the TIDs at a specific transition time. For example, the transition time may be specified such the address change occurs before the MOMAT. Furthermore, the STA may be configured to transmit all of the OTA frames with the new addresses of the TIDs during a specific target time. For example, the transmitter may seek to perform the transmission of the OTA frames just after the TOMAT. Accordingly, after these transmissions and the MOMAT, the STA may subsequently use the new addresses for future transmissions.

Figure 24 more specifically illustrates how a transmitter may use new addresses for each TID at different times. For example, regarding a new frame to be transmitted at 2402, it may be associated with TIDs of varying priorities. In some embodiments, TID 0 may correspond to a lower priority AC which had changed to a new address set before TID 7 (corresponding to a higher priority AC). Accordingly, in 2404, the STA may use the new addresses 2404 in TID specific transmission buffers. For example, in 2408, the STA may use a buffered frame with the new address set for TID 0 followed by buffered frames with the old address set for TID 0, according to some embodiments. Additionally or alternatively for the higher priority TID 7, in 2406 the STA may continue to use old addresses so that it can transition to using new addresses at the same time as a subsequent TID with newer addresses. Accordingly, in 2410, the STA may use the old addresses in a TID specific transmission buffer for TID 7, according to some embodiments.

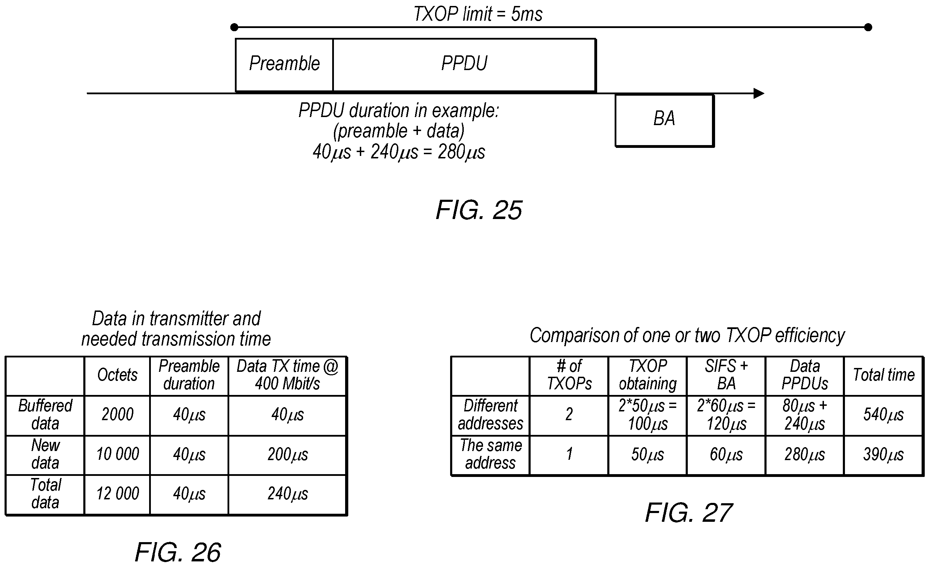

### Figures 25-27 - Optimizing Transmission Efficiency During Address Changes

Figures 25-27 illustrate example aspects optimizing transmission efficiency during address changes, according to some embodiments.

For example, Figure 25 illustrates a transmission corresponding to an example transmission opportunity (TXOP) limit of five milliseconds (ms). In some embodiments, the TXOP limit may be configured for durations shorter or longer than five ms. According to some embodiments, the transmission may include a preamble followed by a PPDU such that the transmission (e.g., preamble and PPDU) corresponds to approximately 280 microseconds (µs) (as one example). Accordingly, the preamble may correspond to a duration of 40 µs while the data portion (e.g., the PPDU) may correspond to a duration of 240 µs, according to some embodiments. Furthermore, the transmission of the preamble and PPDU may be subsequently followed by a bandwidth adaptation (BA) by the AP such that the receive and transmit bandwidth is adjusted (e.g., since the bandwidth may not need to be as large as the cell).

Figure 26 illustrates one aspect of how transmission efficiency can be optimized during address changing procedures. For example, for a STA having 2,000 octets of buffered data and subsequently receives new data for 10,000 octets, the total data would equate to 12,000 octets. Accordingly, with preamble durations of 40 µs, a TXOP limit of 5ms and a 400Mbit/s data rate, this would equate to 40 µs and 200 µs for the buffered and newly received data for a total of 240 µs.

Figure 27 illustrates how in some scenarios it may be more efficient to send one TXOP with a 240µs payload rather than 2 TXOPs with 40µs and 200µs payloads. For example, two TXOPs (e.g., corresponding to different addresses) may first be obtained or reserved prior to transmitting. Accordingly, at 50 µs each, this would equate to a time of 100 µs. Moreover, including the short interframe spacing (SIFS) and BA (each corresponding to 60 µs) and the data PPDUs (two 40 µs preambles and the 240 µs data), a total time of 540 µs would be utilized for the two transmissions. Alternatively, for one TXOP (e.g., corresponding to the scenario of using the same address), obtaining the TXOP would only be 50 µs, the SIFS and BA would only be 60 µs, and the preamble and PPDU data would only be 280 µs. Accordingly, the total time for the TXOP would be 390 µs as compared to the 540 µs for two TXOPs corresponding to different addresses.

Accordingly, in order to transmit frames with the same addresses for longer durations during a PPDU, TXOP or Target Wake Time Service Period (TWT SP) (thus avoiding multiple TXOPs with very little data), a transmitter may continue to use old addresses after the TOMAT to have more payload in a TXOP, according to some embodiments. Additionally or alternatively, the transmitter may switch the buffered frames that have old addresses to use new addresses. In some embodiments, a STA may have a capability bit so as to indicate whether it is capable of switching old addresses to new addresses.

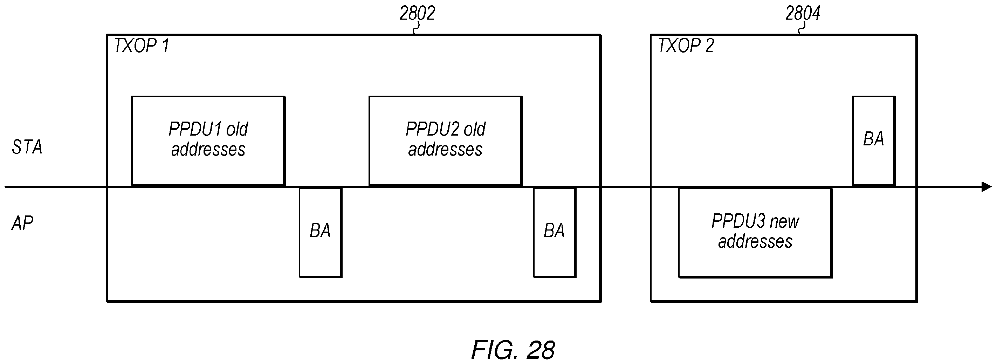

### Figure 28 - Address Changing Techniques for SU PPDUs

Figure 28 illustrates example aspects of address change techniques for single user (SU) physical protocol data units (PPDUs), according to some embodiments. For example, in 2802, the PPDU1 and PPDU2 addresses (old addresses) may be kept the same within TXOP 1, according to some embodiments. Additionally or alternatively, the AP may perform BA following PPDU1 and PPDU2. By keeping the addresses the same in the TXOP, this may make it more difficult for eavesdroppers to detect how the address may be changed in post-association.

For example, during a STA MAC address transition some techniques may be applied to SU PPDU and MU PPDU transmissions. In some embodiments, the STA may transmit in a PPDU frames only from a single address set. Additionally or alternatively, the STA may transmit within UL EDCA TXOP frames only from a single address set. Accordingly, for SU and MU PPDUs, the transmitter may be aware of the buffered traffic and therefore may more efficiently and correctly allocate PPDUs as shown in 2804 and corresponding to TXOP 2 consisting of PPDU3 (corresponding to new addresses) followed by a BA performed by the STA, according to some embodiments.

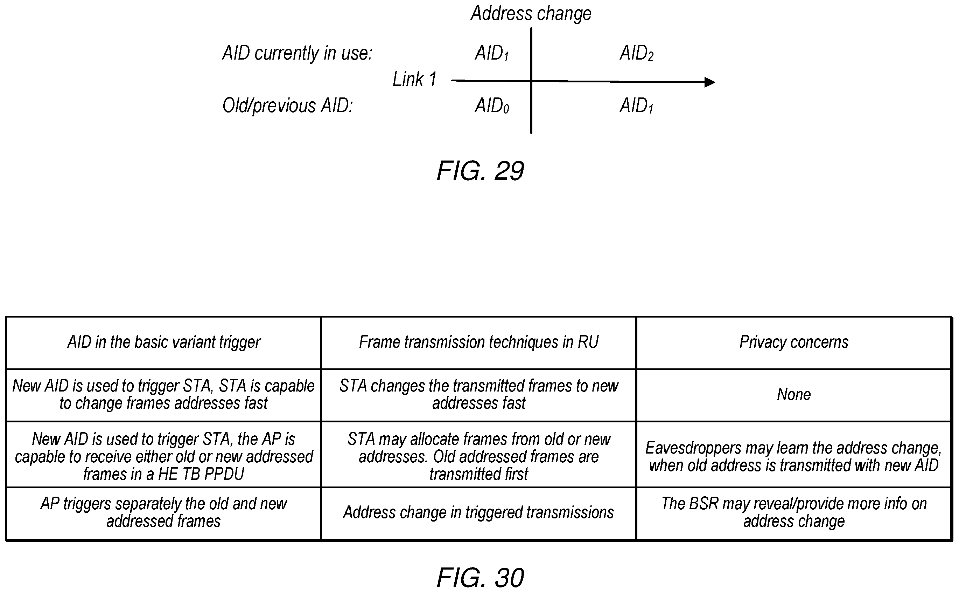

### Figures 29-34 - Address Changing in Triggered Transmissions

Figures 29-34 illustrate example aspects of address changing in triggered transmissions, according to some embodiments. More specifically, Figures 29-34 illustrate example aspects of how triggering AID values in trigger frames may solicit frames from the STA.

According to some embodiments, when a CPE STA changes its address, the CPE STA may still have buffered frames that may utilize old address information. For example, as shown in Figure 29, the address change may include an AID change. In other words, the AID_{Old} (e.g, old/previous AID such as AID₀ is not the same as an AID currently in use (e.g., AID1) or a new AID (AID_{New}). Accordingly when the STA or AP undergoes an address change, AID₁ may then correspond to an old address and AID₂ may correspond to a new address

In some embodiments, the AID and the addresses may be changed at the same time. Accordingly, when the address changes, the AP may not know whether the STA has buffered traffic with old addresses. In some scenarios, this may cause potential issues since the AP may not know whether it should use the new AID or old AID.

Figure 30 illustrates example aspects of frame transmission techniques that can be applied at the resource unit (RU) level. For example, for a new AID in a trigger frame, it may be used to trigger the STA such that the STA may be able to transmit frames with new addresses quickly, according to some embodiments. Accordingly, this quick transition may make it difficult for eavesdroppers to intercept communications or determine that an address change has occurred. In some embodiments, if a new AID in a trigger frame is used to trigger the STA, the AP may be capable of receiving old or new addressed frames in a high efficiency trigger based physical protocol data unit (HE TB PPDU). Accordingly, the STA may allocate frames from old or new addresses and further transmit the old addresses first. However, an old address transmitted with a new AID may alert or inform eavesdroppers of a potential address change.

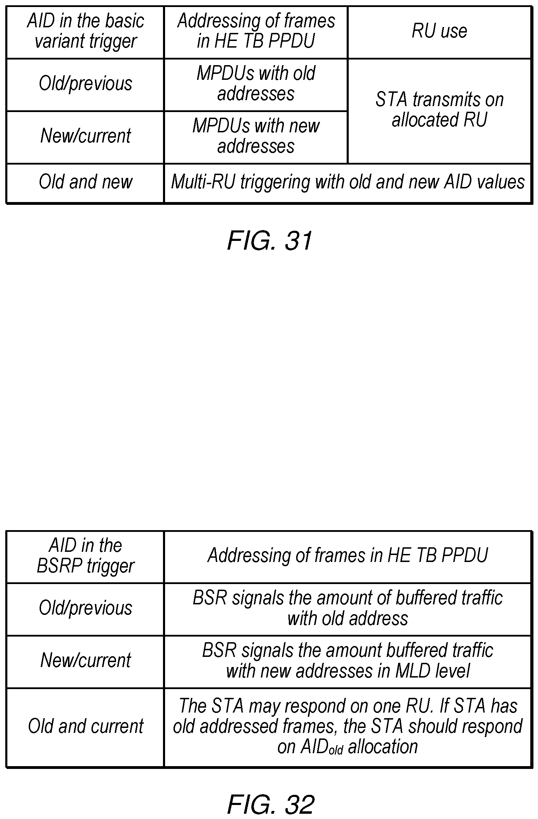

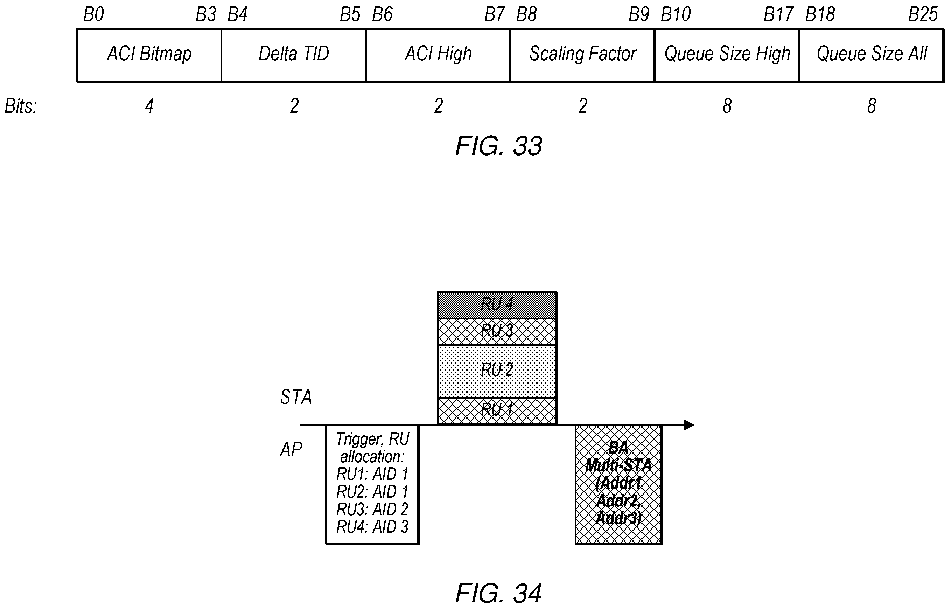

In some embodiments, an AP may be able to separately trigger the old and newly addressed frames. However, this technique this may involve transmission of a buffer status report which could provide or reveal additional information on the address change. For example, Figure 31 illustrates example techniques for how frames in HE TB PPDUs may be addressed using allocated RUs. In some embodiments, if the AID in the trigger frame is an old or previous AID, the MPDUs of the frames in the HE TB PDDUs may be addressed using the old or previous addresses and the STA may transmit on the corresponding allocated RU. Additionally or alternatively, if the AID in the trigger frame is a new or current AID, the MPDUs of the frames in the HE TB PDDUs may be addressed using the new current addresses and the STA may transmit on the corresponding allocated RU. In other words, the AP may separately trigger old frames and new frames by using the respective AID such that the AID_{Old} triggers frames with old/previous addresses and the AID_{new} triggers frames with new or current addresses. According to some embodiments, if the trigger frame includes old and new AIDs, a technique using multi-RU triggering with the old and new AID values may be utilized, as further discussed below with regard to Figures 33-34.

In some embodiments, the AP may send a buffer status report poll (BSRP) with an old AID in a trigger frame to request an amount of buffered traffic with old addresses. More specifically, the number of TIDs with buffered traffic may indicate the number of TIDs that the STA should trigger. For example, as illustrated in Figure 32, if the AID in the BSRP trigger frame is an old or previous address, the BSR may signal the amount of buffered traffic with old addresses. Additionally or alternatively, if the AID in the BSRP trigger frame is a new or current address, the BSR may signal the amount of buffered traffic with new addresses at the MLD level (e.g., via one or more links). According to some scenarios, if the BSRP trigger frame contains both old and current AIDs, the STA may only be allowed to respond using one RU only addressing the frames in the HE TB PPDU. Moreover, if the STA has old addressed frames in its buffer, the STA would likely respond using the old AID RU allocation.

According to some embodiments, the AP may trigger the frames with old addresses first in a TID before triggering frames with new addresses. Additionally or alternatively, the STA may send unsolicited BSR information in the UL frames that have old addresses so as to signal the amount of buffered traffic with old addresses, according to some embodiments. Accordingly, this may indicate to the AP whether it should trigger the STA with old addresses.

Figure 33 illustrates example aspects and information bits of a buffer status report and the content or information that may be used for address changing operations, according to some embodiments. For example, the BSR may include an ACI Bitmap which may be used to signal or indicate the ACs to which the report is provided. Additionally the BSR may include a Delta TID and a ACI Bitmap used for signaling or indicating the TIDs in which the STA has buffered traffic. Furthermore, the BSR may include information bits corresponding to an ACI High parameter which can be used to signal or indicate the highest AC in which the STA has buffered traffic. Moreover, the BSR may include information bits corresponding to a Scaling Factor which can be used to signal or indicate a scaling factor for queue size counters. In some embodiments, the BSR may include information regarding a Queue Size High parameter which may be used to signal or indicate the amount of traffic in the highest AC. Additionally or alternatively, the BSR may include information bits corresponding to a Queue Size All parameter which may be used to signal or indicate the total amount of buffered traffic in all ACs, according to some embodiments. In other words, the BSR may be used to check the amount of buffered traffic in the highest AC and to correctly or accurately allocate resources for it. Additionally or alternatively, the BSR may be used to check the number of TIDs with buffered traffic and to trigger traffic from all of them, according to some embodiments.

According to some embodiments, if the trigger frame includes old and new AIDs, a technique using multi-RU triggering with the old and new AID values may be utilized. For example, Wi-Fi 7 may support multi-RU DL MU PPDU such that the AP may allocate two RUs in DL MU PPDU for the same STA, according to some embodiments. Additionally or alternatively, Wi-Fi 8 may support Multiple-RU triggering such that the AP may allocate two separate RUs in trigger frame transmissions by using the AID of the STA.

Accordingly, if the allocations carry one payload, the receiver may combine both allocated RUs in order to receive the payload, according to some embodiments. Additionally or alternatively, if a STA has two AID values in use, the AP may be able to allocate an RU for each AID value. For example, Figure 34 illustrates that the AID1 and AID3 values may be in use by the same STA where AID1 may correspond to old addresses and AID3 may correspond to new addresses, according to some embodiments. Accordingly, the AP may allocate 2 RU blocks for the STA so that the STA may transmit old and new AID values using both RUs.

In other words, regarding this address change scenario, the AP may allocate RUs with old and the new AID. Additionally, this may provide some security benefits or protection regarding the transmitted payload since, for an eavesdropper to receive the payload, they would combine both received RUs. For example, the STA may use either new or old addresses if the AP allocates RUs with old and new AIDs to the STA, according to some embodiments. However, triggered HE TB PPDU or MU PPDU may only have a few combinations for two RU allocations, so the protection of the transmission may be lessened in this scenario.

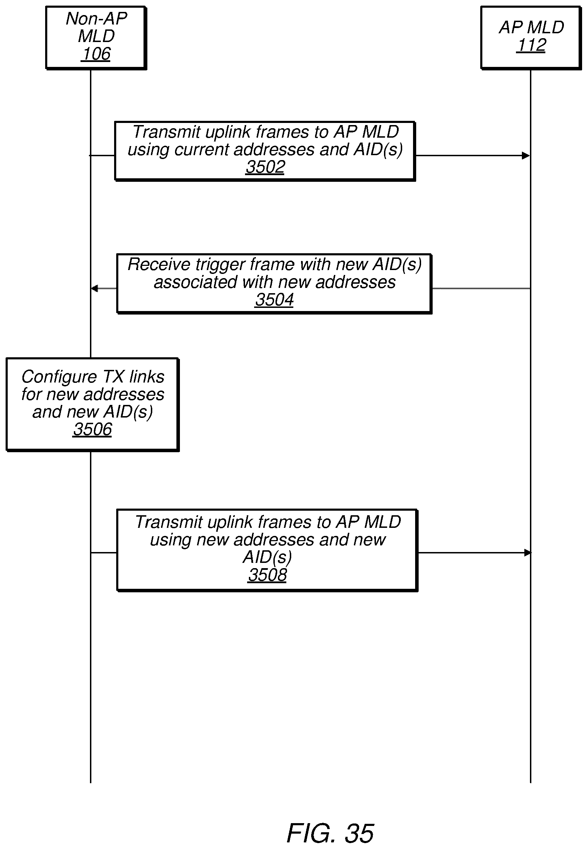

### Figure 35 - Example Method for Address Changing in Triggered Transmissions

Figure 35 is a communication flow diagram illustrating an example method for address changing in triggered transmissions, according to some embodiments.

More specifically, Figure 35 illustrates an embodiment directed toward systems, methods, and mechanisms for non-AP MLDs to perform address changing using triggered transmissions. Such techniques may aid in reduced latency, reduced power consumption, and/or improved security.

Aspects of the method of Figure 35 may be implemented by a non-AP MLD (e.g., non-AP MLD 106) in communication with an AP MLD (e.g., AP MLD 112). The AP MLD and/or non-AP MLD may be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device may be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) may cause a wireless device, STA, UE, non-AP MLD, and/or AP MLD, or other device to perform such method elements.

Note that while at least some elements of the method of Figure 35 are described in a manner relating to the use of communication techniques and/or features associated with IEEE and/or 802.11 (e.g., 802.11bi) specification documents, such description is not intended to be limiting to the disclosure, and aspects of the method of Figure 35 may be used in any suitable wireless communication system, as desired. Similarly, while elements of the method of Figure 35 are described in a manner relating to non-AP MLDs, such description is not intended to be limiting to the disclosure, and aspects of the method of Figure 35 may be used by STAs that are not MLDs, as desired.

The methods shown may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

In 3502, a non-AP MLD may transmit, using one or more respective transmission (TX) links, one or more uplink frames to an AP MLD to one or more respective addresses corresponding to one or more respective reception (RX) links of the AP MLD. For example, a STA may be in communication with an AP and be transmitting frames using currently configured addresses, according to some embodiments. Additionally or alternatively, the one or more uplink frames may include one or more respective association identifiers (AIDs). According to some embodiments, the AIDs may be associated with or correspond to the one or more respective addresses.

In 3504, the non-AP MLD may receive from the AP-MLD, one or more downlink frames including a trigger frame. In other words, the STA may receive downlink frames including a frame configured to trigger an event as part of further communications with the AP. According to some embodiments, the trigger frame may include one or more new AIDs. Additionally or alternatively, the one or more new AIDs may be associated with or correspond to one or more new addresses which are different than the one or more addresses, according to some embodiments.

In 3506, the non-AP MLD may configure, based on the reception of the trigger frame including the one or more new AIDs, the one or more respective TX links with the one or more respective new addresses and the one or more new AIDs, according to some embodiments. In other words, the STA may configure the TX links to utilize the new AIDs and addresses for subsequent communications or transmissions to the AP, according to some embodiments.

In 3508, the non-AP MLD may transmit, to the AP MLD, one or more additional frames using the one or more respective new addresses and the one or more new AIDs. In other words, having configured the appropriate TX links with the new AIDs and the new addresses, the STA may continue or resume transmissions to the AP using the newly configured addresses and AIDs, according to some embodiments.

According to some embodiments, the trigger frame may include a buffer status report poll (BSRP). Additionally or alternatively, the non-AP MLD may transmit, in response to receiving the trigger frame including the BSRP, a buffer status report (BSR) to the AP MLD. In some embodiments, the BSR may indicate the amount of buffered traffic for at least one of the one or more respective addresses or one or more respective new addresses.

In some embodiments, the address configuration may need to be performed quickly in response to a trigger frame. For example, the trigger frame may solicit frames with new addresses and it may be beneficial for these frames to be transmitted quickly (e.g., on the order of or approximately 16µs) after the trigger frame. This fast address change and resumption of transmissions may allow for more seamless communication and efficient data transfers between the STA and AP.

According to further embodiments, the DL frames transmitter, receiver, and/or base service set identifier (BSSID) addresses may be used to indicate whether the new addresses or old addresses are in use. For example, the receiver STA may not be able to detect or determine from a recommended or received AID field value in a trigger frame whether or not the AP request frames being transmitted are using old or new addresses, according to some embodiments. This may be at least partly based on the AID values having offset (e.g., overlapping) values, according to some embodiments. Accordingly, regardless of the recommended or received AID value in the trigger frame, the STA may select the TID that it transmits to the AP, according to some embodiments.

Furthermore and regarding broadcast transmissions, the address in a trigger frame and/or the AID values may be used to identify the triggered devices, according to some embodiments. Alternatively for unicast transmissions, the BSSID and MAC addresses may be used to identify the triggered devices, according to some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device may be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

### Further embodiments

What is claimed is:
1. A method, comprising:
   at a non-access point (AP) multi-link device (MLD) (non-AP MLD):
   transmitting to an AP MLD, using one or more respective transmission (TX) links in an active mode, one or more uplink frames that include one or more respective initial addresses corresponding to one or more respective reception (RX) links of the AP MLD;
   configuring the one or more respective TX links to a lower power mode associated with power conservation;
   configuring the one or more respective TX links to include one or more respective new addresses corresponding to the one or more respective RX links prior to transitioning the one or more respective TX links back to the active mode; and
   transmitting, to the AP MLD in the active mode, one or more additional uplink frames that include the one or more respective new addresses.
2. The method of embodiment 1, wherein:
   configuring the one or more respective TX links to the lower power mode is performed concurrently at a selected time.
3. The method of embodiment 1, wherein:
   the one or more respective TX links are configured with the one or more respective new addresses concurrently at a selected time.
4. The method of embodiment 1, further comprising:
   receiving one or more frames from the AP MLD corresponding to the one or more respective initial addresses of the one or more respective RX links;
   buffering the one or more received frames;
   modifying the one or more received frames with the one or more respective new addresses to generate one or more modified frames; and
   transmitting, to the AP MLD, the one or more modified frames that include the one or more respective new addresses.
5. The method of embodiment 1, wherein the one or more respective initial addresses and one or more respective new addresses are media access control (MAC) addresses.
6. The method of embodiment 1, wherein the one or more respective new addresses are generated using one or more randomized identifiers.
7. The method of embodiment 1, further comprising:
   transmitting an Addresses Configure Request to the AP MLD, wherein the Addresses Configure Request comprises at least one of:
   one or more uplink salt values,
   an item of link information, or
   one or more address change times.
8. The method of embodiment 1, further comprising:
   receiving an Addresses Configure Response from the AP-MLD, wherein the Addresses Configure Response comprises at least one of:
   one or more downlink salt values,
   an item of link information, or
   an approval or indication of an address change.
9. An apparatus, comprising:
   a processor configured to cause a non-access point (AP) multi-link device (MLD) (non-AP MLD) to:
   transmit to an AP MLD, using one or more respective transmission (TX) links, one or more uplink frames that include one or more respective initial addresses corresponding to one or more respective reception (RX) links of the AP MLD;
   receive, from the AP-MLD, one or more downlink frames that include at least one transaction identifiers (TID) and an Address Change Request frame, wherein the Address Change Request frame comprises information corresponding to at least one target over-the-air media access control address change times (TOMAT) or at least maximum over-the-air media access control address change times (MOMAT), and wherein the at least one TID is associated with one or more respective new addresses corresponding to the one or more respective RX links of the AP-MLD;
   configure, based on the at least one TID and during a time interval defined by the at least one TOMAT or the at least one MOMAT, the one or more respective TX links with the one or more respective new addresses; and
   transmit, to the AP MLD, one or more additional frames that include the one or more respective new addresses.
10. The apparatus of embodiment 9, wherein the at least one MOMAT or the at least one TOMAT is altered by a re-association procedure or via a protected management frame.
11. The apparatus of embodiment 9, wherein the one or more respective new addresses are calculated by at least one of the AP MLD or the non-AP MLD using one or more salt values.
12. The apparatus of embodiment 11, wherein the one or more salt values are usable by at least one of the AP MLD or non-AP MLD to calculate at least one of one or more sequence numbers (SNs), one or more packet numbers (PNs), or the at least one TID.
13. A non-access point (AP) multi-link device (MLD) (non-AP MLD), comprising:
   a radio; and
   a processor operably coupled to the radio and configured to cause the non-AP MLD to:
      transmit to an AP MLD, using one or more respective transmission (TX) links, one or more uplink frames that include one or more respective initial addresses corresponding to one or more respective reception (RX) links of the AP MLD, wherein the one or more uplink frames comprise one or more respective association identifiers (AIDs);
      receive, from the AP MLD, one or more downlink frames including a trigger frame, wherein the trigger frame comprises one or more new AIDs, and wherein the one or more new AIDs correspond to one or more respective new addresses;
      configuring, based on the reception of the trigger frame comprising the one or more new AIDs, the one or more respective TX links to include the one or more respective new addresses and the one or more new AIDs; and
      transmit, to the AP MLD, one or more additional frames that include the one or more respective new addresses and the one or more new AIDs.
14. The non-AP MLD of embodiment 13, wherein the trigger frame comprises a buffer status report poll (BSRP).
15. The non-AP MLD of embodiment 14, wherein the processor is further configured to cause the non-AP MLD to:
   transmit, in response to receiving the trigger frame comprising the BSRP, a buffer status report (BSR) to the AP MLD.

## Claims

1. A method, comprising:
by a non-access point, AP, multi-link device, MLD, non-AP MLD (106):
transmitting to an AP MLD, using one or more respective transmission, TX, links, one or more uplink frames that include one or more respective initial addresses corresponding to one or more respective reception, RX, links of the AP MLD;
receiving, from the AP-MLD, one or more downlink frames that include an Address Change Request frame comprising information corresponding to at least one target over-the-air media access control address change time, TOMAT, or at least one maximum over-the-air media access control address change time, MOMAT,;
configuring, during a time interval defined by the at least one TOMAT or the at least one MOMAT, the one or more respective TX links with one or more respective new addresses corresponding to the one or more respective RX links of the AP-MLD; and
transmitting, to the AP MI,D, one or more additional frames that include the one or more respective new addresses.

2. The method of claim 1, wherein the one or more respective new addresses are calculated by at least one of the AP MLD or the non-AP MLD using one or more salt values.

3. The method of claim 2, wherein the one or more salt values are usable by at least one of the AP MLD or non-AP MLD to calculate at least one of one or more sequence numbers, SNs, or one or more packet numbers, PNs.

4. The method of claim 1, further comprising:
receive information from the AP MLD related to the timing or scheduling of performing an address change.

5. The method of claim 4, wherein the information includes the one or more respective new addresses to be used by the non-AP MLD (106) for subsequent transmissions.

6. The method of claim 1, wherein the at least one TOMAT corresponds to a target time for the non-AP MLD (106) to initiate or perform an address change for the one or more respective TX links.

7. The method of claim 1, wherein the at least one MOMAT corresponds to a maximum time for the non-AP MLD (106) to have performed one or more address changes.

8. The method of claim 1, wherein the at least one MOMAT or the at least one TOMAT is altered by a re-association procedure or via a protected management frame.

9. The method of claim 8, wherein the at least one TOMAT is increased to a later time so as to allow the non-AP MLD (106) more time to perform additional operations.

10. The method of claim 8, wherein the at least one TOMAT is decreased to an earlier time such that one or more address changes are performed subsequent to entering a power save mode.

11. The method of claim 8, wherein the at least one MOMAT is decreased such that one or more address changes are performed before a maximum allowed time has elapsed.

12. The method of claim 8, wherein the at least one MOMAT is increased so as to allow the non-AP MLD (106) additional time to perform at least one of one or more address changes or other procedures.

13. The method of claim 12, wherein the at least one MOMAT is increased to accommodate large amounts of data traffic corresponding to longer address change times.

14. An apparatus, comprising:
a processor configured to, when executing instructions stored in a memory, perform operations according to any of the methods of claims 1-13.

15. A non-transitory computer-readable storage medium that stores instructions for execution by one or more processors to perform operations according to any of the methods of claims 1-13.
